Europäisches Patentamt

European Patent Office

Office européen des brevets

(19)

(11) Veröffentlichungsnummer : **0 032 567**
**B1**

(12) **EUROPÄISCHE PATENTSCHRIFT**

(45) Veröffentlichungstag der Patentschrift :
22.06.83

(51) Int. Cl.³ : **B 60 T 15/04, B 60 T 15/12, B 60 T 15/16**

(21) Anmeldenummer : 80108035.9

(22) Anmeldetag : 19.12.80

(54) **Führerbremsventil für indirekte Druckluftbremsen von Schienenfahrzeugen.**

(30) Priorität : 21.01.80 DE 3002001

(43) Veröffentlichungstag der Anmeldung :
29.07.81 Patentblatt 81/30

(45) Bekanntmachung des Hinweises auf die Patenterteilung : 22.06.83 Patentblatt 83/25

(84) Benannte Vertragsstaaten :
**CH DE FR GB LI**

(56) Entgegenhaltungen :
**DE A 2 022 233**
**DE A 2 363 554**
**DE A 2 454 384**
**DE B 1 044 859**
**DE B 1 145 216**
**DE B 1 192 229**
**DE B 1 202 305**
**DE B 1 277 296**
**DE B 2 454 350**
**FR E 78 462**

(73) Patentinhaber : **Knorr-Bremse GmbH**
**Moosacher Strasse 80**
**D-8000 München 40 (DE)**

(72) Erfinder : **Baumgarth, Rolf, Dr.**
**Auweg 4 e**
**D-8056 Neufahrn (DE)**
Erfinder : **Krause, Friedrich**
**Ehlerstrasse 4**
**D-8000 München 90 (DE)**

EP 0 032 567 B1

# Führerbremsventil für indirekte Druckluftbremsen von Schienenfahrzeugen

Die Erfindung bezieht sich auf ein Führerbremsventil für indirekte Druckluftbremsen von Schienenfahrzeugen, mit willkürlich in Richtung « Lösen » und « Bremsen » betätigbaren, nach ihrer Betätigung selbsttätig in eine mittlere Ruhestellung zurückkehrenden Vorsteuereinrichtungen zum Steuern eines Vorsteuermediums, mit einem entsprechend der Steuerung des Vorsteuermediums in Abhängigkeit von der Betätigungszeit der Vorsteuereinrichtungen steuerbaren, selbstabschließenden Relaisventil zur Überwachung eines Hauptluftleitungsdruckes, und mit einem einen Regeldruck abgebenden Druckregler zur Erstellung eines mittels des Vorsteuermediums in seiner Druckhöhe beeinflußbaren Steuerdruckes für das Relaisventil, wobei je ein vom Vorsteuermedium schaltbares Löse- und Bremssteuerventil vorhanden ist, das Lösesteuerventil ein eine Verbindung vom Druckregler zu einem vom Steuerdruck beaufschlagten Raum überwachendes Durchgangsventil und das Bremssteuerventil ein Auslaßventil für den den Steuerdruck führenden Raum aufweist, und wobei in der Betätigungsstellung « Lösen » der Vorsteuereinrichtungen sich das Lösesteuerventil in seiner Schaltstellung mit geöffnetem Durchgangsventil und das Bremssteuerventil in seiner Schaltstellung mit geschlossenem Auslaßventil, in der « Ruhestellung » der Vorsteuereinrichtung sich das Bremssteuerventil in seiner Schaltstellung mit geschlossenem Auslaßventil, und in der Betätigungsstellung « Bremsen » der Vorsteuereinrichtungen sich das Lösesteuerventil in seiner Schaltstellung mit geschlossenem Durchgangsventil und das Bremssteuerventil in seiner Schaltstellung mit geöffnetem Auslaßventil befinden.

Ein derartiges Führerbremsventil ist aus der DE-B-12 02 305 bekannt. Die Vorsteuereinrichtungen sind hierbei als an den Steuerpulten angeordnete Wechselschalter oder Druckknopfschalter ausgebildet, mit welchen die als Magnetventile ausgebildeten Löse- und Bremssteuerventile rein elektrisch ansteuerbar sind. Das Lösesteuermagnetventil weist nur das einfache Durchgangsventil auf, welches in eine Verbindung vom Druckregler zu einem vom Steuerdruck beaufschlagten Ausgleichsbehälter eingeordnet ist. Bei Undichtheit des Durchgangventils können somit während Bremsungen ungewollte Drucksteigerungen im Ausgleichsbehälter auftreten, welche zu ungewollten Bremslösevorgängen führen. Das bekannte Führerbremsventil ist mit verschiedenen Zusatzeinrichtungen ausgestattet, beispielsweise mit einem Differenzdruckschalter, welcher die Erregung des Bremssteuermagnetventils nach dessen Bremsbetätigung jedenfalls bis zum Erreichen einer ersten Bremsstufe unterbricht, mit einer elektrisch ansteuerbaren, auf den Druckregler wirkenden Angleichvorrichtung, mit einer elektrisch ansteuerbaren Füllstoßeinrichtung und mit einer ebenfalls elektrisch ansteuerbaren Absperrvorrichtung für die Druckluftversorgung.

Bei einem weiterhin aus der DE-B-1 145 216 bekannten Führerbremsventil weisen die Vorsteuerventile je zwei selbstabschließende Stößelventile auf, deren eines dem Aufbau eines als Vorsteuermedium dienenden Vorsteuerdruckes aus einer Druckluftquelle über einen auf eine die Regeldruckhöhe in der Hauptluftleitung übersteigenden Druck eingestellten Druckregler und deren anders dem Auslaß des Vorsteuerdruckes zur Atmosphäre dient. Der Vorsteuerdruck beaufschlagt die Steuerkammer eines den Hauptluftleitungsdruck überwachenden Relaisventils ; über ein kolbengesteuertes Absperrventil und eine Düse ist die Steuerkammer des Relaisventils mit einem weiteren, auf die Regeldruckhöhe eingestellten, zweiten Druckregler verbunden. Die Regeldruckhöhe des zweiten Druckreglers beaufschlagt den Steuerkolben des Absperrventils entgegen dem Druck in der Steuerkammer in Schließrichtung des Absperrventils. Das bekannte Führerbremsventil weist je nach den baulichen Gegebenheiten des mit dem Führerbremsventil auszurüstenden Fahrzeuges unterschiedliche Leitungslängen und damit Volumen der mit Vorsteuerdruck gefüllten Leitungsverbindungen auf ; damit sind jedoch vom Fahrzeug abhängig unterschiedliche Betätigungszeiten für die Stößelventile der Vorsteuereinrichtungen erforderlich, um bei unterschiedlichen Fahrzeugen gleichartige Druckänderungen für den Vorsteuerdruck zu bewirken. Das bekannte Führerbremsventil weist also ein fahrzeugabhängig unterschiedliches Steuerungsverhalten auf. Weiterhin kann nach Einsteuern einer Bremsung durch Undichtigkeiten des Einlaß-Stößelventils einer Vorsteuereinrichtung der Vorsteuerdruck, welcher zugleich und unmittelbar als Steuerdruck des Relaisventils dient, ungewollt steigen, wodurch sich ein ungewolltes Bremsenlösen ergibt. Beim bekannten Führerbremsventil ist weiterhin keine Vorrichtung vorhanden, welche sicherstellt, daß nach einem nur kurzzeitigen Öffnen des Auslaß- Stößelventils einer Vorsteuereinrichtung eine zum Erreichen der ersten Bremsstufe ausreichende Druckabsenkung für den Hauptluftleitungsdruck ausgesteuert wird. Es ist auch nicht möglich, eine derartige, aus der nachstehend erläuterten DE-AS 2 454 350 bekannte Vorrichtung organisch in die einzelnen Baugruppen des bekannten Führerbremsventils zu integrieren.

Aus der DE-AS 1 192 229 ist ein Führerbremsventil der eingangs genannten Art mit elektrischem Vorsteuermedium bekannt ; mittels an den Vorsteuereinrichtungen vorgesehener Kontakte sind hierbei Magnetventile steuerbar, welche in eine Einlaßverbindung von einem auf Regeldruckhöhe eingestellten Druckregler bzw. einen Auslaß für einen ein den Hauptluftleitungsdruck überwachendes Relaisventil steuernden Steuerdruck eingeordnet sind. Auch bei diesem Führerbremsventil kann nach Einsteuern einer Bremsung durch Undichtigkeiten eines Magnetventils ein ungewollter Druckanstieg des Steuerdruckes und damit ein ungewolltes Bremsenlösen eintreten. In das Führerbremsventil ist auch nicht ohne weiteres eine Vorrichtung integrierbar, welche nach nur kurzzeitiger Betätigung des ein Bremsen bewirkenden Kontaktes eine zum Erreichen der ersten Bremsstufe ausreichende Druckabsenkung für den Hauptluftleitungsdruck bewirken könnte.

Bei beiden vorstehend erwähnten, bekannten Führerbremsventilen ist nur ein pneumatisches bzw. nur ein elektrisches Vorsteuermedium vorgesehen ; ein Vertauschen dieser Vorsteuermedien ist nicht ohne weiteres möglich.

Aus der DE-OS 2 363 554 ist es bekannt, bei einem Führerbremsventil mit durch selbstabschließende Stößelventile steuerbarem, pneumatischen Vorsteuermedium den Ventilsitz des Einlaß- Stößelventils mit einem ständig entlüfteten Zwischenraum zu versehen, um sicherzustellen, daß nach Einsteuern einer Bremsung der Vorsteuerdruck nicht infolge Ventilundichtigkeiten ungewollt steigen kann. Diese Anordnung ist jedoch nicht bei Führerbremsventilen mit elektrischem Vorsteuermedium verwendbar.

Mit der DE-AS 1 277 296 sind in Verbindung mit einer Absperreinrichtung für Führerbremsventile ähnliche, im Bereich des Relaisventils anzuordnende Einrichtungen bekannt geworden ; diese Einrichtungen sind jedoch nicht geeignet, sicherzustellen, daß nach einem Einsteuern einer Bremsung mittels des Führerbremsventils ein ungewollter Anstieg des Hauptluftleitungsdruckes ausgeschlossen ist.

Die bereits erwähnte DE-AS 2 454 350 zeigt eine getrennt von einer Vorsteuereinrichtung und einem Relaisventil anzuordnende Vorrichtung, welche sicherstellt, daß nach einem nur kurzzeitigen Betätigen der Vorsteuereinrichtung in Richtung « Bremsen » eine zum Erreichen der ersten Bremsstufe ausreichende Druckabsenkung des Hauptluftleitungsdruckes erreicht wird. Der Entlüftungsraum des der Vorsteuereinrichtung zugehörenden Auslaß- Stößelventils für den Vorsteuerdruck ist hierbei mit einer über eine Düse ständig entlüfteten, ersten Kammer verbunden, deren Druck, unterstützt von der Kraft einer Feder, ein Kolbenglied in Öffnungsrichtung eines Absperrventils belastet. Die Vorrichtung ist jedoch nicht bei elektrischem Vorsteuermedium verwendbar. Weiterhin stellt bei dem die Vorrichtung aufweisenden Führerbremsventil der Vorsteuerdruck zugleich den Steuerdruck für das Relaisventil dar, so daß sich, bedingt durch das von Fahrzeuggegebenheiten bestimmte Volumen der Vorsteuerdruck führenden Leitungsverbindungen, ein fahrzeugabhängiges Steuerungsverhalten des Führerbremsventils ergibt.

Die DE-PS 1 044 859 zeigt ein Führerbremsventil, bei welchem ein das Vorsteuermedium und zugleich den Steuerdruck für das Relaisventil darstellender Vorsteuerdruck mittels selbstabschließender, an den Vorsteuereinrichtungen angeordneter Stößelventile direkt proportional zur gewünschten Bremsstufe steuerbar ist. Zum Sicherstellen der einem auf Atmosphärendruck abgesenktem Vorsteuerdruck entsprechenden Lösestellung ist im Relaisventil dieses Führerbremsventils in einer gedrosselten Verbindung von einem den Steuerdruck führenden Raum zur Atmosphäre ein Absperrventil eingeordnet, das von einem in Schließrichtung vom Vorsteuerdruck entgegen seiner Eigenspannung und Atmosphärendruck beaufschlagten Kolbenglied betätigbar ist.

Der Erfindung liegt die Aufgabe zugrunde, ein Führerbremsventil der eingangs genannten Art zu schaffen, welches neben den üblichen Forderungen, baulich einfach und betriebs- und funktionssicher zu sein, wahlweise geeignet für die Verwendung eines pneumatischen oder elektrischen Vorsteuermediums ausbildbar ist, wobei bei Verwendung eines pneumatischen Vorsteuermediums die vom jeweiligen Fahrzeug bestimmte Größe und Ausbildung des pneumatischen Vorsteuerkreises keinen Einfluß auf das Steuerungsverhalten des Führerbremsventils hat, bei welchem nach Einleiten einer Bremsung ein ungewolltes Einsteuern eines Lösens durch undichte Ventile ausgesclossen ist, und in welches weiterhin günstig Zusatzfunktionen bewirkende Einrichtungen integrierbar sind.

Diese Aufgabe wird nach der Erfindung dadurch gelöst, daß das Lösesteuerventil ein Doppelventil aufweist, welches das in die Verbindung vom Druckregler zu einem Zwischendruckraum eingeordnete Durchgangsventil und ein entgegengesetzt zu diesem schaltbares Entlüftungsventil für den Zwischendruckraum umfaßt, und daß der Zwischendruckraum über ein nur bei seiner Druckbeaufschlagung öffenbares Absperrventil mit dem den Steuerdruck für das Relaisventil führenden Raum verbunden ist.

Durch diese Ausbildung ergibt sich unabhängig von der Art des Vorsteuermediums eine praktisch von der Länge der Vorsteuerleitungen und damit den jeweiligen Gegebenheiten des Fahrzeuges unabhängige Ansteuerung des Relaisventils, so daß das Führerbremsventil sowohl bei pneumatischem wie bei elektrischem Vorsteuermedium ein von den jeweiligen Fahrzeuggegebenheiten unabhängiges Steuerungsverhalten aufweist. Weiterhin stellt das dem Zwischendruckraum nachgeordnete Absperrventil in Verbindung mit dem Lösesteuerventil sicher, daß nach Einsteuern einer Bremsung durch undichte Ventile weder an den Vorsteuereinrichtungen noch im Relaisventil noch am Lösesteuerventil oder einem sonstigen Ventil des Führerbremsventils ein ungewolltes Bremsenlösen eintreten kann.

Nach einem weiteren Merkmal der Erfindung ist es dabei besonders zweckmäßig, wenn in einer weiteren Betätigungsstellung « Füllen » der Vorsteuereinrichtungen sich das Lösesteuerventil in seiner Schaltstellung mit geöffnetem Durchgangsventil und das Bremssteuerventil in seiner Schaltstellung mit geschlossenem Auslaßventil befinden und wenn eine nur in dieser Betätigungsstellung vom Vorsteuermedium erregbare Selbsthaltevorrichtung vorgesehen ist, welche nach ihrer Erregung bis zu einem nachfolgenden Einstellen der Betätigungsstellung « Bremsen » selbsterregt bleibt und welche in ihrer Erregungsstellung das Lösesteuerventil in dessen der Betätigungsstellung « Lösen » der Vorsteuereinrichtung entsprechender Schaltstellung hält. Hieraus ergeben sich Funktions- und Bedienungsvorteile für das Führerbremsventil, da in der Ruhestellung der Vorsteuereinrichtungen der den Steuerdruck führende Kreis nach einer vorangehenden Betätigungsstellung « Füllen » die Regeldruckhöhe selbstnachspeisend bzw. druckerhaltend, nach einer anderen Betätigungsstellung dagegen nicht drucknachspeisend bzw. druckerhaltend ist. Es ergibt sich somit die Möglichkeit, ausgehend von einer Bremseinsteuerung eine Vorsteuereinrichtung nur kurzzeitig in die Betätigungsstellung « Füllen » und sofort anschließend in die Ruhestellung zu bringen ; das Führerbremsventil bewirkt dann selbsttätig ein Einspeisen und Aufrechterhalten von Regeldruckhöhe für die Hauptluftleitung, so daß die Fahrzeug- bzw. Zugbremsen selbsttätig gelöst werden und gelöst bleiben, der Fahrzeugführer von der Überwachung dieser Vorgänge somit entlastet ist.

Nach einem weiteren Merkmal der Erfindung ist es zweckmäßig, wenn das dem Zwischendruckraum nachgeordnete Absperrventil von einem Kolben gesteuert ist, der in Öffnungsrichtung vom Druck im Zwischendruckraum und andererseits von einer Feder belastet ist. Hierdurch wird gegenüber der ansonsten eventuell naheliegenden Verwendung eines federbelasteten Rückschlagventils als Absperrventil ein Druckabfall am geöffneten Absperrventil vermieden, wodurch das Steuerungsverhalten des Führerbremsventils günstig beeinflußt wird.

Nach einem weiteren Merkmal der Erfindung ist es zweckmäßig, wenn dem Auslaßventil des Bremssteuerventils ein bei Unterschreiten einer Mindestdruckhöhe des Steuerdruckes schließendes, zweites Durchgangsventil vor- oder nachgeschaltet ist. Dieses erst bei Unterschreiten eines bereits maximale Bremseinsteuerung bewirkenden Bremsdruckes schließende, zweite Durchgangsventil hält auch bei längere Zeit andauernder Betätigungsstellung « Bremsen » den Steuerdruck und damit den Hauptluftleitungsdruck auf einer bestimmten Mindestdruckhöhe, wodurch bei einem nachfolgenden Bremsenlösen der Druckluftverbrauch vermindert und der Lösevorgang zeitlich beschleunigt wird.

Nach einem weiteren Merkmal der Erfindung ist es zweckmäßig, wenn ein Stufenventil vorgesehen ist, welches ein in eine zum Auslaßventil des Bremssteuerventils parallele, von dem mit dem Steuerdruck beaufschlagten Raum zu einer Entlüftungsdüse führende Verbindung eingeordnetes Absperrventil aufweist, das von einem Kolbenglied gesteuert ist, welches in Öffnungsrichtung des Absperrventils vom Druck vor der Entlüftungsdüse und der Kraft einer Feder andererseits vom Regeldruck belastet ist. Das günstig mit den anderen Ventileinrichtungen des Führerbremsventils zu einer Baueinheit integrierbare Stufenventil stellt sicher, daß bei einer auch nur kurze Zeit andauernden Betätigungsstellung « Bremsen » ein Absenken des Hauptluftleitungsdruckes um einen ein Einsteuern der ersten Bremsstufe gewährleistenden Betrag erreicht wird.

Abweichend zur vorstehend erwähnten, besonders vorteilhaften Ausgestaltung kann nach einem Merkmal der Erfindung das Führerbremsventil ein in eine gedrosselte Verbindung von einem mit dem Regeldruck des Druckreglers beaufschlagten Raum zu einem den Steuerdruck des Relaisventils führenden Raum eingeordnetes Absperrventil aufweisen, das von einem in Schließrichtung vom Regeldruck und entgegengesetzt vom Steuerdruck und der Kraft einer Feder belasteten Kolbenglied betätigbar ist. Durch diese Ausbildung wird erreicht, daß der den Steuerdruck führende Kreis nach einem Einsteuern der Regeldruckhöhe diese Regeldruckhöhe in der « Ruhestellung » selbsttätig aufrecht erhält, unabhängig davon, welche Betätigungsstellung der « Ruhestellung » vorangehend eingestellt war.

Nach einem weiteren Merkmal der Erfindung ergibt sich dadurch eine besonders vorteilhafte Ausbildung des Führerbremsventils, daß als Vorsteuermedium ein pneumatischer Vorsteuerdruck vorgesehen ist, daß jede Vorsteuereinrichtung ein in den Betätigungsstellungen « Füllen » und « Lösen » geöffnetes Einlaßventil aus einer Druckluftvorratsquelle in einen mit einem ersten Vorsteuerdruck gefüllten Raum und ein in der Betätigungsstellung « Bremsen » geöffnetes Auslaßventil aus diesem Raum aufweist, daß nahe des Relaisventils ein Druckminderventil vorgesehen ist, das auf eine den Druck der Druckluftvorratsquelle unterschreitende Vorsteuer- Regeldruckhöhe eingestellt und dessen Ausgang mit einem den ersten Vorsteuerdruck führenden Raum verbunden ist, daß das Lösesteuerventil von einem ersten Kolben gesteuert ist, der in Öffnungsrichtung des Durchgangsventils vom ersten Vorsteuerdruck entgegen der Kraft einer ersten Feder beaufschlagt ist, wobei die erste Feder nur bei Belastung des ersten Kolbens mit einer die Vorsteuer- Regeldruckhöhe überschreitenden Druckhöhe komprimierbar ist, und daß das Bremssteuerventil von einem zweiten Kolben gesteuert ist, der in Schließrichtung des Auslaßventils vom ersten Vorsteuerdruck entgegen der Kraft einer zweiten Feder belastet ist, wobei die zweite Feder bei Belastung des zweiten Kolbens mit der Vorsteuer- Regeldruckhöhe komprimiert ist. Hierdurch ergibt sich bei Verwendung eines pneumatischen Vorsteuermediums und einfachem Aufwand ein hinsichtlich Steuerungsverhalten und Sicherheit den Anforderungen genügendes Führerbremsventil.

Nach einem weiteren Merkmal der Erfindung kann das Führerbremsventil dadurch gekennzeichnet sein, daß jede Vorsteuereinrichtung ein zweites Ein- und Auslaßventil zum Steuern eines zweiten Vorsteuerdruckes aufweist, wobei das zweite Einlaßventil nur in der Betätigungsstellung « Füllen » zur Verbindung eines den zweiten Vorsteuerdruck führenden Raumes mit der Druckluftvorratsquelle geöffnet, das zweite Auslaßventil in allen anderen Stellungen der Vorsteuereinrichtung geöffnet ist, und daß die Selbsthaltevorrichtung ein zwischen dem Ausgang des Druckminderventils und einem den ersten Vorsteuerdruck führenden Raum eingeordnetes Absperrventil aufweist, das von einem dritten Kolben entgegen der Kraft einer dritten Feder gesteuert ist, wobei der dritte Kolben in Schließrichtung des Absperrventils vom Druck in einem Beaufschlagungsraum belastet ist, der über ein Rückschlagventil aus einem den zweiten Vorsteuerdruck führenden Raum füllbar und über ein weiteres Rückschlagventil mit einem den ersten Vorsteuerdruck führenden Raum verbunden ist, und wobei die dritte Feder nur bei Belastung des dritten Kolbens mit einer die Vorsteuer- Regeldruckhöhe überschreitenden Druckhöhe komprimierbar ist. Hierdurch ergibt sich ein besonders einfacher und funktionssicherer Aufbau der Selbsthaltevorrichtung bei Verwendung eines pneumatischen Vorsteuermediums.

Nach einem weiteren Merkmal der Erfindung kann das Führerbremsventil dabei weiterhin dadurch gekennzeichnet sein, daß die Selbsthaltevorrichtung ein entgegengesetzt zu ihrem Absperrventil schaltbares Einlaßventil in einer eine Drossel aufweisenden Verbindung von der Druckluftquelle zu ihrem Beaufschlagungsraum aufweist. Durch diese Ausbildung wirkt bei gelöster Bremse nicht nur der den Steuerdruck, sondern auch der den Vorsteuerdruck führende Kreis druckerhaltend, so daß geringe Undichtigkeiten ohne Funktionsstörungen ausgeglichen werden.

Abweichend zu diesen Ausbildungsmöglichkeiten kann das Führerbremsventil nach einem weiteren Merkmal der Erfindung auch derart ausgebildet werden, daß das Löse- und das Bremssteuerventil als bei Erregung das Durchgangsventil geöffnet bzw. das Auslaßventil geschlossen haltende Magnetventile ausgebildet sind, daß jede Vorsteuereinrichtung wenigstens drei einerseits mit einer elektrischen Spannungsquelle verbundene Kontakte aufweist, deren erster Kontakt nur in der Betätigungsstellung « Lösen » geschlossen ist und die Spannungsführung einer zur Erregungsspule des Lösesteuer-Magnetventils führenden Lösekabels überwacht, deren zweiter Kontakt nur in der Betätigungsstellung « Bremsen » geöffnet ist und — gegebenenfalls in Sereienschaltung zu entsprechenden Kontakten weiterer Vorsteuereinrichtungen — die Spannungsführung eines zur Erregungsspule des Bremssteuer-Magnetventils führenden Bremskabels überwacht, und deren dritter Kontakt nur in der Betätigungsstellung « Füllen » geschlossen ist und die Spannungsführung eines zur Erregungsspule einer Halterelais führenden Haltekabels überwacht, daß das Halterelais zwei bei Erregung geschlossene Relaiskontakte aufweist, deren einer Relaiskontakt zwischen das Löse- und das Bremskabel und deren anderer Relaiskontakt zwischen das Halte- und das Bremskabel eingeordnet ist, und daß die Erregungsspulen andererseits mit dem zweiten Pol der Spannungsquelle verbunden sind. Hierdurch ergibt sich eine besonders einfache und zweckmäßige Ausgestaltung des Führerbremsventils bei Verwendung eines elektrischen Vorsteuermediums, wobei die Selbsthaltvorrichtung in besonders einfacher Weise als Haltrelais ausgebildet ist.

Nach einem weiteren Merkmal der Erfindung kann bei einer eine Selbsthaltevorrichtung aufweisenden Ausführungsform des Führerbremsventils ein selbsttätiges Aufrechthalten der Regeldruckhöhe im den Steuerdruck führenden Kreis in der auf ein vollständiges Bremslösen folgenden « Ruhestellung » dadurch erreicht werden, daß die Selbsthaltevorrichtung mit einer in der Betätigungsstellung « Lösen » und gegebenenfalls in der « Ruhestellung » der Vorsteuereinrichtung bei wenigstens annähernder Druckgleichheit von Regeldruckhöhe und Steuerdruckhöhe ansprechenden Schalteinrichtung zusammenwirkt, welche bei ihrem Ansprechen die Selbsthaltevorrichtung erregt.

Eine besonders vorteilhafte Ausführungsform des Führerbremsventils ergibt sich hierbei nach weiteren Merkmalen der Erfindung dadurch, daß das Löse- und das Bremsventil als bei Erregung das Durchgangsventil geöffnet bzw. das Auslaßventil geschlossen haltende Magnetventile ausgebildet sind, daß jede Vorsteuereinrichtung wenigstens drei einerseits mit einer elektrischen Spannungsquelle verbundene Kontakte aufweist, deren erster Kontakt nur in der Betätigungsstellung « Lösen » geschlossen ist und die Spannungsausführung eines zur Erregerspule des Lösesteuer-Magnetventils führenden Lösekabels überwacht, deren zweiter nur in der Betätigungsstellung « Bremsen » geöffnet ist und — gegebenenfalls in Serienschaltung zu entsprechenden Kontakten weiterer Vorsteuereinrichtungen — die Spannungsführung eines zur ErrePgungsspule des Bremssteuer-Magnetventils führenden Bremskabels überwacht, und deren dritter Kontakt nur in der Betätigungsstellung « Füllen » geschlossen ist und die Spannungsführung eines zur Erregungsspule eines HalterePlais führenden Haltekabels überwacht, daß das Halterelais zwei bei Erregung geschlossenen Kontakte aufweist, daß ein Relais vorgesehen ist, dessen Erregungsspule über einen nur bei die Regeldruckhöhe des Druckreglers zumindest um Peinen geringen Druckwert von ca. 0,2 bar unterschreitender Höhe des Steuerdruckes geöffneten Kontakt eines Differenzdruckschalters an das Bremskabel angeschlossen ist und das bei Erregung einen Kontakt geschlossen und zwei weitere Kontakte geöffnet hält, wobei der geschlossene Kontakt des Relais in eine Verbindung vom Bremskabel zum Lösekabel, der eine geöffnete Kontakt des Relais in eine Verbindung vom Bremskabel zu den beiden Kontakten des Halterelais und der andere geöffnete Kontakt des Relais zwischen das Lösekabel und ein Kabel eingeordnet ist, und wobei des weiteren der eine Kontakt des Haltrelais andererseits an das Haltekabel und der andere Kontakt andererseits an das zu dem Kontakt des Relais führende Kabel angeschlossen ist und daß die Erregungsspulen des Lösesteuer-Magnetventils, des Bremssteuer-Magnetventils, des Halterelais und des Relais andererseits mit dem zweiten Pol der Spannungsquelle verbunden sind.

Schließlich ist es nach einem weiteren Merkmal der Erfindung möglich, das Löse- und das Bremssteuer-Magnetventil gleichartig auszubilden, wobei der dem Durchgangsventil entsprechende Ventilteil des Bremssteuer-Magnetventils blind abgeschlossen ist. Die gleichartige Ausbildung von Löse- und Bremssteuer-Magnetventil wirkt sich günstig auf deren Herstellungs-, Montage- und Wartungskosten aus und vereinfacht auch die Montage- und Wartungsarbeiten für das Führerbremsventil.

Es ist noch besonders herauszustellen, daß unabhängig von der Verwendung eines pneumatischen oder elektrischen Vorsteuermediums die dem Löse- und Bremssteuerventil nachgeordneten Ventileinrichtungen zur Überwachung und Steuerung des Steuerdruckes für das Relaisventil sowie das Relaisventil selbst völlig gleichartig ausgebildet sein können, wodurch sich für diese Baugruppen bzw. Bauteile ebenfalls die vorstehend hinsichtlich des Löse- und Bremssteuer-Magnetventils erwähnten Vorteile ergeben.

In den Zeichnungen sind unterschiedliche Ausführungsbeispiele für nach der Erfindung ausgebildete Führerbremsventile schematisch dargestellt, und zwar zeigt

Figur 1 in Verbindung mit Fig. 2 ein Führerbremsventil mit pneumatischem Vorsteuermedium, wobei die Fig. 1 und 2 an den Linien X-X aneinanderzufügen sind,

Figur 3 ein Führerbremsventil mit elektrischem Vorsteuermedium und

Figur 4 eine Einzelheit eines abgewandelt ausgebildeten Führerbremsventils

Figur 5 eine weitere Ausführung eines Führerbremsventils mit elektrischem Vorsteuermedium.

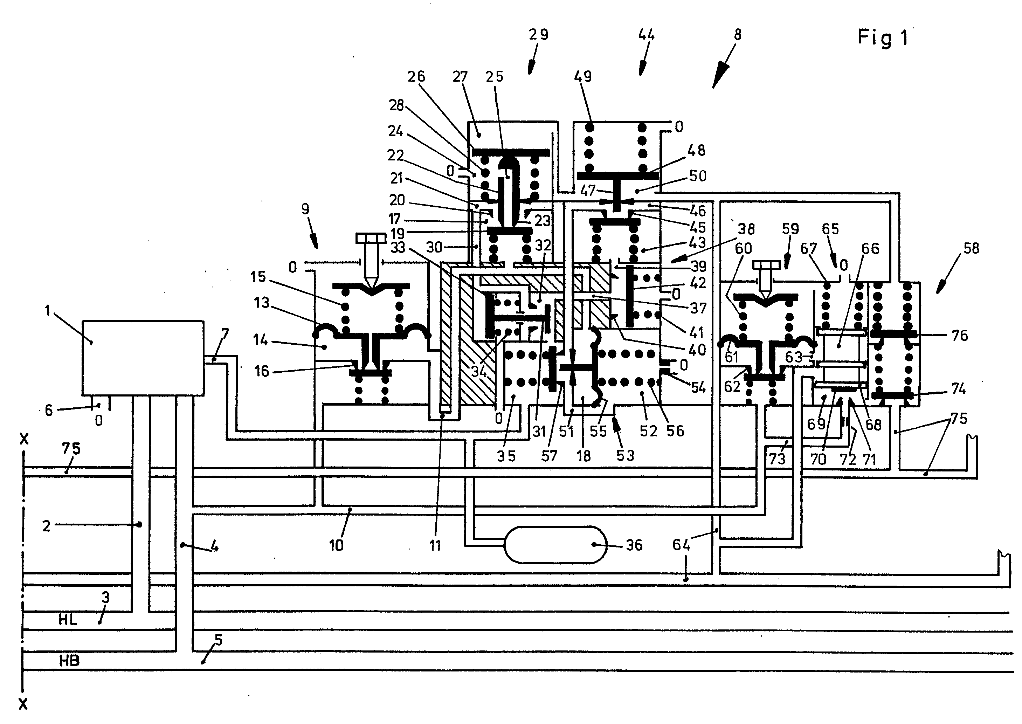

Nach Figur 1 ist ein Relaisventil 1 der bei Führerbremsventilen üblichen Bauart über eine großquerschnittige Leitung 2 mit einer Hauptluftleitung 3 verbunden, deren Druckverhalten die Fahrzeugbremsen steuert. Bei einer bestimmten Regeldruckhöhe von beispielsweise 5 bar in der Hauptluftleitung sind die nicht dargestellten Fahrzeugbremsen gelöst, bei einer Druckabsenkung in der Hauptluftleitung 3 werden die Fahrzeugbremsen betätigt und erreichen bei einem bestimmten Druckwert von beispielsweise 3,4 bar in der Hauptluftleitung ihre maximale Betätigungsstärke. Weiterhin führt vom Relaisventil 1 eine großquerschnittige Leitung 4 zu einer Hauptbehälterleitung 5, die mit einer nicht dargestellten Druckluftquelle hohen Druckes, beispielsweise 10 bar, in Verbindung steht. Weiterhin ist das eine Entlüftung 6 aufweisenden Relaisventil 1 mit einer einen Steuerdruck führenden, kleinquerschnittigen Leitung 7 verbunden. Der in der Leitung 7 anstehende Steuerdruck betätigt das Relaisventil 1 in üblicher und bekannter Weise derart, daß das Relaisventil 1 über die Leitung 2 in die Hauptluftleitung 3 eine dem Steuerdruck entsprechende Druckhöhe einregelt, wozu es Druckluft aus der Leitung 4 in die Leitung 2 einspeisen, die Leitung 2 absperren oder Druckluft aus der Leitung 2 durch die Entlüftung 6 zur Atmosphäre ablassen kann.

Räumlich nahe des Relaisventils 1 ist eine nachstehend näher erläuterte, eine Reihe von Einzelventilen umfassende Ventileinheit 8 angeordnet. Die Ventileinheit 8 weist einen auf die Regeldruckhöhe der Hauptluftleitung 3, also beispielsweise 5 bar, eingestellten Druckregler 9 auf, welcher über eine kleinquerschnittige Leitung 10 aus der Leitung 4 mit Druckluft versorgt wird und in eine Kanalverbindung 11 Regeldruckhöhe einspeist. Der Druckregler ist in üblicher, bekannter Weise aufgebaut : Er weist eine Membrane 13 auf, welche von der in einem mit der Kanalverbindung 11 verbundenen Raum 14 herrschenden Regeldruckhöhe entgegen der Kraft einer einstellbaren Feder 15 belastet ist und welche ein ein Einlaß- und ein Auslaßteil umfassendes Doppelventil 16 für den Raum 14 steuert. Die Kanalverbindung 11 führt zu zwei Räumen 17 und 18 in der Ventileinheit 8. Im Raum 17 befindet sich eine federbelastete Doppelventildichtung 19, welche zusammen mit einem gehäusefesten Ventilsitz 20 ein eine Verbindung des Raumes 17 mit einem Zwischendruckraum 21 überwachendes Durchgangsventil 19, 20 bildet. Weiterhin bildet die Doppelventildichtung 19 zusammen mit einem am Ende eines Ventilrohres 22 angeordneten Ventilsitzes 23 ein Entlüftungsventil 19, 23 für den Zwischendruckraum 21, welches nur bei geschlossenem Durchgangsventil 19, 20 zu öffnen ist. Das Ventilrohr 22 führt abgedichtet verschieblich in einen Raum 24, der ständig mit der Atmosphäre 0 in. Verbindung steht. Die Axialbohrung 25 des Ventilrohres 22 mündet ständig in den Raum 24 ein. Der Raum 24 ist auf der dem Zwischendruckraum 21 abgewandten Seite mittels eines Kolbens 26, der mit dem Ventilrohr 22 verbunden ist, von einem Raum 27 abgetrennt. Im Raum 24 befindet sich eine Feder 28, welche den Kolben 26 in Schließrichtung des Durchgangsventils 19, 20 und Öffnungsrichtung des Entlüftungsventils 19, 23 mit einer Kraft beaufschlagt, welche größer ist, als die vom Kolben 26 bei Füllung des Raumes 27 mit Regeldruckhöhe vom Kolben 26 entgegenwirkend ausgeübte Kraft, welche jedoch kleiner ist als die vom Kolben 26 bei Füllung des Raumes 27 mit dem in der Hauptbehälterleitung 5 herrschenden Druck ausgeübte Kraft. Die unter den Bezugszeichen 17 bis 28 genannten Teile stellen miteinander ein Lösesteuerventil 29 dar.

Der Zwischendruckraum 21 ist über eine Kanalverbindung 30 und ein Absperrventil 31 mit einem Raum 32 verbindbar. Das Absperrventil 31 ist von einem Kolben 33 gesteuert, der in Öffnungsrichtung des Absperrventils 31 vom Druck im Zwischendruckraum 21 und andererseits von der Kraft einer Feder 34 und Atmosphärendruck belastet ist.

Der Raum 32 steht mit einem weiteren Raum 35 in der Ventileinheit 8 in Verbindung, an welchen die den Steuerdruck für das Relaisventil 1 führende Leitung 7 angeschlossen ist. Ein mit der Leitung 7 verbundener Ausgleichsbehälter 36 vergrößert das Volumen der vom Steuerdruck gefüllten Räume.

Vom an das Absperrventil 31 anschließenden Raum 32 führt eine Kanalverbindung 37 zu einem in der Ventileinheit 8 angeordneten Durchgangsventil 38, welches einen die Einmündung der Kanalverbindung 37 in einen Raum 39 umgebenden Ventilsitz 40 und einen in Andrückrichtung an den Ventilsitz 40 von einer Feder 41 entgegen dem Druck im Raum 39 belasteten Kolben 42 umfaßt.

Der Raum 39 des Durchgangsventils 38 steht mit einem Raum 43 eines ebenfalls der Ventileinheit 8 zugehörenden Bremssteuerventils 44 in Verbindung. Das Bremssteuerventil 44 weist ein Auslaßventil 45 auf, welches eine Verbindung des Raumes 43 mit einem weiteren Raum 46 überwacht. Das Auslaßventil 45 ist vermittels eines Stößels 47 von einem Kolben 48 gesteuert, der in Öffnungsrichtung des Auslaßventils 45 von der Kraft einer Feder 49 und Atmosphärendruck entgegen dem Druck in einem Raum 50 beaufschlagt ist. Der Kolben 48 und die Feder 49 sind derart bemessen, daß bei Beaufschlagen des Raumes 50 mit Regeldruckhöhe oder mit einem höheren Druck das Auslaßventil 45 geschlossen ist, bei Absinken des Druckes im Raum 50 um einen bestimmten Sicherheits- Druckwert unter die Regeldruckhöhe das Auslaßventil 45 dagegen geöffnet wird.

Vom Raum 46 führt eine Kanalverbindung 51 zu einem Raum 52 eines weiterhin der Ventileinheit 8 zugehörenden Stufenventils 53. Der über eine Düse 54 ständig mit der Atmosphäre verbundene Raum 52 ist mittels eines Kolbengliedes 55 vom bereits erwähnten, vermittels des Druckreglers 9 mit Regeldruckhöhe gefüllten Raum 18 getrennt. Das ständig von einer im Raum 52 angeordneten Feder 56 belastete Kolbenglied 55 steuert vermittels eines Stößels ein Absperrventil 57, welches in eine Verbindung von der Kanalverbindung 51 zum Steuerdruck führenden Raum 35 eingeordnet ist. Das Kolbenglied 55 und die Feder 56 sind dabei derart bemessen, daß das Absperrventil 57 geöffnet bzw. offen gehalten wird, solange der Raum 52 mit wenigstens einer Druckhöhe beaufschlagt wird, welche um einen ein sicheres Erreichen der ersten Bremsstufe gewährleistenden Druckwert unterhalb der Regeldruckhöhe liegt.

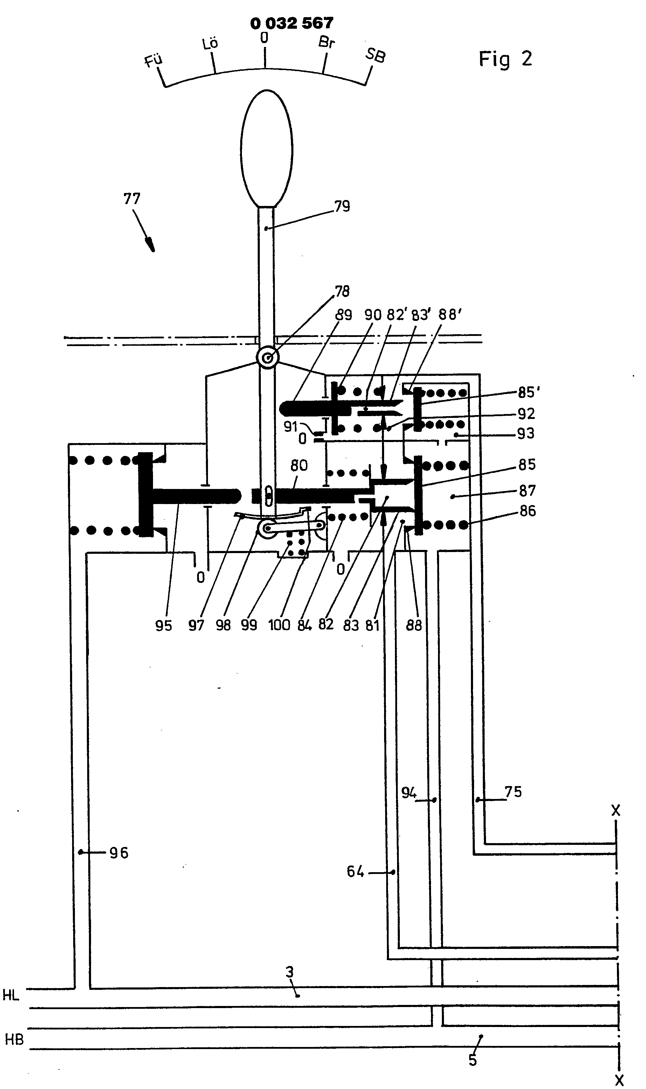

Der Ventileinheit 8 gehört weiterhin eine Selbsthaltevorrichtung 58 zu. Die Selbsthaltevorrichtung 58 weist ein über die Leitung 10 mit Druckluft versorgtes Druckminderventil 59 geringer Leistung, also mit kleinen Durchströmungsquerschnitten auf, welches ähnlich dem Druckregler 9 aufgebaut ist, also eine justierbare Feder 60, eine Membrane 61 und ein von der Membrane 61 betätigbares Doppelventil 62 zur Steuerung einer an seinem Ausgang 63 anstehenden, zweiten Regeldruckhöhe umfaßt. Zwischen dem Ausgang 63 und einer einen ersten Vorsteuerdruck führenden Leitung 64 ist ein schieberventilartig ausgebildetes Absperrventil 65 eingeordnet, dessen Kolbenschieber 66 den Ausgang 63 zu überschleifen vermag und in Öffnungsrichtung des Absperrventils 65 von der Kraft einer Feder 67, andererseits vom seinen Kolben 68 belastenden Druck in einem Beaufschlagungsraum 69 belastet ist. Eine am Kolben 68 im Beaufschlagungsraum 69 angeordnete Ventildichtung 70 bildet zusammen mit einem gehäusefesten Ventilsitz 71 ein Einlaßventil 70, 71, welches vom Kolbenschieber 66 entgegengesetzt zum vorerwähnten Absperrventil 65 schaltbar ist und welches die Einmündung einer eine Drossel 72 aufweisenden Leitung 73 in den Beaufschlagungsraum 69 überwacht. Die Leitung 73 steht andererseits mit der Hauptbehälterdruck führenden Leitung 10 in Verbindung. Der Beaufschlagungsraum 69 ist über ein Rückschlagventil 74 aus einer einen zweiten Vorsteuerdruck führenden Rohrleitung 75 füllbar und steht über ein weiteres Rückschlagventil 76 mit der den ersten Vorsteuerdruck führenden Leitung 64 in Verbindung. Der Raum 27 des Lösesteuerventils 29 und der Raum 50 des Bremssteuerventils 44 sind an die Leitung 64 angeschlossen. Die Leitung 64 und die Rohrleitung 75 führen zu Vorsteuereinrichtungen 77, deren eine in Fig. 2 schematisch im Schnitt dargestellt ist ; beim Aneinanderfügen der Fig. 2 und Fig. 1 an den Linien X-X ergeben sich die entsprechenden Leitungsverbindungen. Bei Vorhandensein mehrerer Vorsteuereinrichtungen werden diese einander parallel geschaltet : An die rechts in Fig. 1 abgebrochen dargestellten Enden der Leitung 64 und der Rohrleitung 75 können weitere Vorsteuereinrichtungen angeschlossen werden bzw. diese Leitungsenden sind bei Fehlen weiterer Vorsteuereinrichtungen zu verschließen.

Die Vorsteuereinrichtung 77 weist gemäß Fig. 2 einen um ein Drehlager 78 schwenkbaren Betätigungshebel 79 auf, der aus einer Ruhestellung o in einer Richtung in eine Betätigungsstellung Lö « Lösen » und eine auf diese folgende Betätigungsstellung Fü « Füllen » bzw. in entgegengesetzter Richtung in eine Betätigungsstellung Br « Bremsen » bzw. eine nachfolgende Betätigungsstellung SB « Schnellbremsen » einstellbar ist. Am dem Handgriff abgewandten Ende ist am Betätigungshebel 79 ein im wesentlichen senkrecht auskragender Ventilstößel 80 angelenkt, welcher in einem Raum 81 mit einem eine ständig über einen großen Querschnitt entlüftete Bohrung 82 umgebenden Ventilsitz 83 endet. Eine Feder 84 belastet den Ventilstößel 80 in Andrückrichtung des Ventilsitzes 83 an eine Doppelventildichtplatte 85 ; der Ventilsitz 83 stellt zusammen mit der Doppelventildichtplatte 85 ein Auslaßventil 83, 85 für den Raum 81 dar. Eine Feder 86 drückt die in einem mit Hauptbehälterdruck gefüllten Raum 87 angeordnete Doppelventildichtplatte 85 an einen gehäusefesten Ventilsitz 88, mit welchem die Doppelventildichtplatte 85 ein eine Verbindung zwischen den Räumen 87 und 81 überwachendes Einlaßventil 85, 88 bildet. Unter der Wirkung der Federn 84 und 86 werden das Auslaßventil 83, 85 und das Einlaßventil 85, 88 federnd in Schließrichtung belastet und der Betätigungshebel 79 gegen Federkraft auslenkbar in der Ruhestellung o gehalten. Die den ersten Vorsteuerdruck führende Leitung 64 mündet in den Raum 81 ein.

Zwischen dem Drehlager 78 und der Anlenkstelle des Ventilstößels 80 liegt am Betätigungshebel 79 ein weiterer Ventilstößel 89 unter der Kraft einer Feder 90 an. Der Ventilstößel 89 gehört einer ein zweites Auslaßventil 83', 85' und ein zweites Einlaßventil 85', 88' umfassenden Einrichtung zu, welche entsprechend dem Auslaßventil 83, 85 bzw. Einlaßventil 85, 88 aufgebaut und neben diesen angeordnet sind. Eine Bohrung 82' des Ventilstößels 89 steht über eine Düse 91 in ständiger Verbindung zur Atmosphäre. Das zweite Auslaßventil 83', 85' und das zweite Einlaßventil 85', 88' steuern eine gedüste Entlüftung bzw. Druckbeaufschlagung eines Raumes 92 aus einem Raum 93, der über den Raum 87 und eine Leitung 94 an die Hauptbehälterleitung 5 angeschlossen ist. Der Raum 92 ist an die den zweiten Vorsteuerdruck führende Rohrleitung 75 angeschlossen. In der Ruhestellung o des Betätigungshebels 79 ist das Auslaßventil 83', 85' unter der Kraft der Feder 90 geöffnet.

Andererseits des Betätigungshebels 79 ist etwa gleichachsig zum Ventilstößel 80 ein großquerschnittiges Stößelventil 95 angeordnet, welches nur bei Einstellung des Betätigungshebels 79 in die Betätigungsstellung SB « Schnellbremsen » geöffnet wird und welches in eine Verbindung von einer großquerschnittigen, an die Hauptluftleitung 3 angeschlossenen Zweigleitung 96 zur Atmosphäre 0 eingeordnet ist. Am Ende des Betätigungshebels 79 befindet sich eine Nockenbahn 97, gegen welche eine Rolle 98 unter der Kraft einer Feder 99 angedrückt wird. Die Nockenbahn 97 weist eine im wesentlichen zylindrische Form um das Drehlager 78 auf ; nur nahe ihres einen Endes befindet sich eine Einstufung 100, in welche die Rolle 98 nur bei Einstellen des Betätigungshebels 79 in die Betätigungsstellung SB « Schnellbremsen » einrastet und den Betätigungshebel 79 in dieser Betätigungsstellung hält. Aus allen anderen Betätigungsstellungen kehrt der Betätigungshebel 79 nach seiner Betätigung selbsttätig, unter dem Einfluß der Federn 84 und 86, in die Ruhestellung o zurück.

Bei unbetätigtem Führerbremsventil und gelösten Bremsen nehmen die Teile des Führerbremsventils die aus Fig. 1 und 2 ersichtlichen Lagen ein. Die Hauptbehälterleitung 5 ist auf eine die Regeldruckhöhe (beispielsweise 5 bar) in der Hauptluftleitung 3 wesentlich übersteigende Druckhöhe (beispielsweise 10 bar) aufgeladen. Der Betätigungshebel 79 der Vorsteuereinrichtung 77 bzw. die Betätigungshebel weiterer, nicht dargestellter Vorsteuereinrichtungen befinden sich in der Ruhestellung o, das Auslaßventil 83, 85 und das Einlaßventil 85, 88 sowie das zweite Einlaßventil 85', 88' sind geschlossen und nur das zweite Auslaßventil 83', 85' ist geöffnet. Das Stößelventil 95 ist ebenfalls geschlossen. Die den ersten Vorsteuerdruck führende Leitung 64 ist daher seitens der Vorsteuereinrichtung 77 abgesperrt, während die den zweiten Vorsteuerdruck führende Rohrleitung 75 über die Düse 91 in die Atmosphäre entlüftet gehalten ist.

An der Ventileinheit 8 speist der Druckregler 9 in die Kanalverbindung 11 Regeldruckhöhe ein, welche durch das geöffnete Durchgangsventil 19, 20 in den Zwischendruckraum 21 gelangt, den Kolben 33 beaufschlagt und das Ventil 31 geöffnet hält. Weiterhin steht die Regeldruckhöhe im Raum 32 und damit über den Raum 35 auch in der den Steuerdruck für das Relaisventil 1 führenden Leitung 7 an. Das Relaisventil 1 steuert daher in die Hauptluftleitung 3 ebenfalls Regeldruckhöhe ein. Über die Kanalverbindung 37 steht die Regeldruckhöhe auch im Raum 39 an, beaufschlagt den Kolben 42 und hält somit das Durchgangsventil 38 geöffnet, so daß auch im Raum 43 Regeldruckhöhe ansteht. Das Auslaßventil 45 ist geschlossen und der Raum 46 mit der Kanalverbindung 51 und dem Raum 52 ist daher über die Düse 54 in die Atmosphäre entlüftet. Die weiterhin im Raum 18 anstehende Regeldruckhöhe beaufschlagt das Kolbenglied 55, das Absperrventil 57 ist daher geschlossen. Der Kolbenschieber 66 befindet sich in seiner dargestellten, oberen Endstellung, in welcher das Absperrventil 65 geschlossen und das Einlaßventil 70, 71 geöffnet ist. Der in der Leitung 10 anstehende Hauptbehälterdruck herrscht daher über die Drossel 72 und das geöffnete Einlaßventil 70, 71 auch im Beaufschlagungsraum 69 und hält vermittels des Kolbens 68 den Kolbenschieber 66 in der dargestellten Lage. Aus dem Beaufschlagungsraum 69 wird der Hauptbehälterdruck über das Rückschlagventil 76 auch in die Leitung 64 eingespeist, so daß die Kolben 26 und 48 des Löse- bzw. Bremssteuerventils 29 und 44 mit Hauptbehälterdruck beaufschlagt sind und diese Ventile in den erwähnten und dargestellten Schaltstellungen halten. Das Rückschlagventil 74 schirmt die über die Vorsteuereinrichtung entlüftete Rohrleitung 75 vom Hauptbehälterdruck ab. Das Druckminderventil 59 hält an seinem Ausgang 63 eine zweite Regeldruckhöhe aufrecht, welche der vom Druckregler 9 abgegebenen Regeldruckhöhe im wesentlichen entsprechen kann, aber auch abweichend, insbesondere niedriger, beispielsweise im Bereich von 3,5 bar gewählt sein kann.

Zum Bremsen wird der Betätigungshebel 79 der Vorsteuereinrichtung 77 für eine der beabsichtigten Bremsstufe entsprechende Zeitspanne aus der Ruhestellung o in die Betätigungsstellung Br « Bremsen » verstellt und sodann wieder freigegeben, woraufhin er selbsttätig in die Ruhestellung o zurückkehrt. Während der Zeitspanne, in welcher sich der Betätigungshebel 79 in der Betätigungsstellung Br « Bremsen » befindet, wird das Auslaßventil 83, 85 offen gehalten, so daß die Leitung 64 über dieses Auslaßventil 83, 85 mit der Atmosphäre verbunden ist. Da über die Drossel 72 u. das Rückschlagventil 76 nur eine geringe Druckluftmenge in die Leitung 64 nachzuströmen vermag, sinkt der Druck in der Leitung 64 rasch ab, der Druck im Beaufschlagungsraum 69 sinkt entsprechend und die Feder 67 drückt den Kolbenschieber 66 in die untere Endstellung, wobei das Einlaßventil 70, 71 geschlossen und das Absperrventil 65 geöffnet wird ; infolge der geringen Durchgangsquerschnitte des Druckminderventils 59 kann also über den Ausgang 63 und das Absperrventil 65 nur mehr eine geringe Druckluftmenge noch dazu niedrigen Druckes in die Leitung 64 einströmen. Über die relativ leistungsfähige Entlüftung an der Vorsteuereinrichtung vermittels dessen Auslaßventils 83, 85 wird somit der Druck in der Leitung 64 rasch bis auf nahezu Atmosphärendruck abgesenkt und abgesenkt gehalten. Damit wird auch der in den Räumen 27 und 50 des Löse- bzw. Bremssteuerventils 29 bzw. 44 herrschende Druck auf nahezu Atmosphärendruck abgesenkt, so daß die Federn 28 bzw. 49 die Kolben 26 bzw. 48 zu verschieben vermögen. Im Lösesteuerventil 29 werden somit durch Anheben des Kolbens 26 das Durchgangsventil 19, 20 geschlossen und das Entlüftungsventil 19, 23 geöffnet. Damit wird der Zwischendruckraum 21 von der Kanalverbindung 11 abgesperrt und über die Axialbohrung 25 und den Raum 24 in die Atmosphäre entlüftet. Die Feder 34 schließt daher das Absperrventil 31 und sperrt den Raum 32 von dem nunmehr Atmosphärendruck führenden Zwischendruckraum 21 ab. Der Kolben 48 des Bremssteuerventils 44 senkt sich ab und öffnet das Auslaßventil 45, so daß im Raum 43 anstehende Druckluft durch die Kanalverbindung 51 in den Raum 52 einströmt und das Kolbenglied 55 mit etwa Regeldruckhöhe beaufschlagt. Das Kolbenglied 55 stößt infolgedessen das Absperrventil 57 auf, so daß die in der Leitung 7 und im Ausgleichsbehälter 36 noch anstehende Regeldruckhöhe in den Raum 52 nachströmen. Zugleich strömt aus dem Raum 52 Druckluft durch die Düse 54 zur Atmosphäre ab ; da durch das geschlossene Absperrventil 31 keine Druckluft nachströmen kann, senkt sich der in den verbundenen Räumen, insbesondere der Leitung 7 und dem Ausgleichsbehälter 36 anstehende Druck rasch unter die Regeldruckhöhe ab. Sobald eine Druckabsenkung in diesen Räumen erreicht ist, welche ein sicheres Einsteuern der ersten Bremsstufe gewährleistet, vermag die nach wie vor im Raum 18 anstehende Regeldruckhöhe das Kolbenglied 55 entgegen der Kraft der Feder 56 und dem im Raum 52 anstehenden, abgesenkten Druck zurückzudrücken, so daß sich das Absperrventil 57 schließt und die unmittelbare Verbindung von der Leitung 7 zum Raum 52 unterbrochen wird. Bei in der Betätigungsstellung Br « Bremsen » gehaltenem Betätigungshebel 79 strömt nunmehr Druckluft aus der Leitung 7 durch die Räume 35 und 32, die Kanalverbindung 37, den Raum 39 und das weiterhin geöffnete Auslaßventil 45 sowie die Kanalverbindung 51 zum Raum 52 und über die Düse 54 zur Atmosphäre ab, wodurch der in der Leitung 7 anstehende Steuerdruck weiter abgesenkt wird. Bei Erreichen der gewünschten Bremsstufe wird der Betätigungshebel 79 freigegeben und kehrt infolgedessen unter Schließen des Auslaßventils 83, 85 in die Ruhestellung o zurück. Das Druckminderventil 59 speist weiterhin Druckluft in die Leitung 64 ein und baut in dieser rasch seine zweite Regeldruckhöhe auf. Der Kolben 48 des Bremssteuerventils 44 wird daher entgegen der Kraft der Feder 49 angehoben und das Auslaßventil 45 schließt sich, während das Lösesteuerventil 29 in seiner den Zwischendruckraum 21 entlüftet haltenden Schaltstellung verbleibt. Damit ist die Entlüftung der Leitung 7 über die Düse 54 unterbrochen und der augenblicklich in der Leitung 7 und dem Ausgleichsbehälter 36 erreichte Druck bleibt erhalten. Das Relaisventil 1 überträgt die in die Leitung 7 eingesteuerte Druckabsenkung in die Hauptluftleitung 3, so daß in dieser die Regeldruckhöhe rasch entsprechend abgesenkt wird und die Fahrzeugbremsen in der gewünschten Stärke betätigt werden. Damit ist die gewählte Bremsstufe erreicht.

Es ist besonders darauf hinzuweisen, daß nach Erreichen dieser Bremsstufe das Druckminderventil 59 die zweite Regeldruckhöhe in der Leitung 64 aufrecht erhält, auch wenn diese oder die mit ihr verbundenen Ventile undicht sind ; es ist somit ausgeschlossen, daß das Löse- oder das Bremssteuerventil 29 oder 44 ungewollt durch unbeabsichtigte Druckänderungen in der Leitung 64 betätigt werden, selbst wenn die gewählte Bremsstufe über längere Zeit beibehalten wird. Das Lösesteuerventil 29 hält währenddessen den Zwischendruckraum 21 entlüftet, so daß die Leitung 7 und die mit dieser verbundenen Räume über die in der Ventileinheit 8 vorgesehenen Ventile nur an Räume niedrigeren Druckes angrenzt und bei Ventilundichtigkeiten somit kein ungewollter Druckanstieg der Leitung 7 auftreten kann. Ein ungewolltes Lösen der Bremsen durch ungewollte Drucksteigerung in der Hauptluftleitung 3 ist somit ausgeschlossen.

Zum nachfolgenden Lösen der Bremsen ist der Betätigungshebel 79 wenigstens kurzzeitig in die Betätigungsstellung Fü « Füllen » zu verstellen, er kann sofort nachfolgend freigegeben werden und selbsttätig in die Ruhestellung o zurückkehren. Über die dabei geöffneten Einlaßventile 85, 88 und 85', 88' der Vorsteuereinrichtung 77 wird dabei Hauptbehälterdruck in die Leitung 64 und die Rohrleitung 75 eingespeist. Über die Leitung 75 und das Rückschlagventil 74 gelangt der Hauptbehälterdruck in den Beaufschlagungsraum 69, wodurch der Kolben 68 und damit der Kolbenschieber 66 entgegen der Kraft der Feder 67 in die in Fig. 1 dargestellte Lage angehoben wird ; das Absperrventil 65 wird dabei geschlossen und das Einlaßventil 70, 71 öffnet sich wieder. Der in die Leitung 64 eingespeiste Hauptbehälterdruck beaufschlagt den Kolben 26 des Lösesteuerventils 29 und schiebt diesen entgegen der Kraft der Feder 28 in die in Fig. 1 dargestellte, untere Endlage, wobei das Entlüftungsventil 19, 23 geschlossen und das Durchgangsventil 19, 20 geöffnet wird. Nach Freigabe des Betätigungshebels 79 und Rückkehr in seine Ruhestellung o wird seitens der Vorsteuereinrichtung 77 die Leitung 64 abgesperrt und die Rohrleitung 75 wieder in die Atmosphäre entlüftet ; durch die bereits geschilderte Drucknachspeisung von Hauptbehälterdruck durch die Leitung 73, die Drossel 72, das geöffnete Einlaßventil 70, 71 und das Rückschlagventil 76 wird der Hauptbehälterdruck in der Leitung 64 aufrecht erhalten und die erreichte Schaltstellung am Lösesteuerventil 29 damit beibehalten. Der Zwischendruckraum 21 wird über das geöffnete Durchgangsventil 19, 20 wieder mit Regeldruckhöhe beaufschlagt, der Kolben 33 öffnet das Absperrventil 31 und Regeldruckhöhe gelangt über die Leitung 7 als Steuerdruck zum Relaisventil 1, welches infolgedessen auch in die Hauptluftleitung 1 wieder Regeldruckhöhe einspeist und somit ein Lösen der Bremsen des Fahrzeuges bzw. des Zuges bewirkt. Damit ist der Ausgangszustand wieder erreicht. Es ist hervorzuheben, daß in dieser Stellung der Druckregler 9 Regeldruckhöhe in die Leitung 7 nachspeist, auch bei Undichtigkeiten in diesem Bereich die Regeldruckhöhe somit aufrecht erhalten bleibt. Das Führerbremsventil wirkt also, nach einem Lösen vermittels der Betätigungsstellung Fü « Füllen », vollkommen selbstnachspeisend.

Falls diese Selbstnachspeisung des Führerbremsventils nicht erwünscht ist, beispielsweise falls kein vollständiges Lösen der Bremsen, sondern nur eine schwächere Bremsstufe eingesteuert werden soll, ist ausgehend von der vorstehend bereits beschriebenen Bremsstufe der Betätigungshebel 79 für eine gewisse Zeitspanne in die Betätigungsstellung Lö « Lösen » zu verstellen. In dieser Betätigungsstellung wird vermittels des Ventilstößels 80 das Einlaßventil 85, 88 geöffnet, während das Auslaßventil 83', 85' noch nicht geschlossen und das Einlaßventil 85', 88' dementsprechend noch nicht geöffnet wird. Die Vorsteuereinrichtung 77 verbindet somit in der Betätigungsstellung Lö « Lösen » die Leitungen 94 und 64 miteinander, während die Rohrleitung 75 entlüftet bleibt. Nach einem Freigeben des Betätigungshebels 79 kehrt dieser in die Ruhestellung o zurück und die Leitung 64 wird dementsprechend unter Trennung von der Leitung 94 abgesperrt. Ausgehend von der beim Bremsen erreichten Schaltstellung der Ventileinheit 8 mit abgesenktem Kolbenschieber 66 bewirkt der über die Vorsteuereinrichtung 77 während der Zeitspanne der Einstellung in die Betätigungsstellung Lö « Lösen » in die Leitung 64 eingespeiste Hauptbehälterdruck ein Umschalten des Lösesteuerventils 29 in die dargestellte Schaltstellung, während das Druckminderventil 59 über seinen kleinen Durchgangsquerschnitt eine geringe Druckluftmenge aus der Leitung 64 zur Atmosphäre abbläst, was aber durch ausreichende Nachspeisung von Seite der Vorsteuereinrichtung 77 ausgeglichen wird, so daß keine Druckabsenkung in der Leitung 64 eintritt. Über das Lösesteuerventil 29 wird für die Betätigungszeitdauer der Vorsteuereinrichtung 77 der Zwischendruckraum 21 von der Atmosphäre abgetrennt und mit Regeldruckhöhe aus dem Druckregler 9 beaufschlagt, so daß Druckluft durch das sich öffnende Absperrventil 31 in die Leitung 7 einströmt und den in dieser herrschenden Druck anhebt. Das Relaisventil 1 überträgt die Drucksteigerung entsprechend auf den in der Hauptluftleitung 3 herrschenden Druck, so daß die Betätigungsstärke der Bremsen entsprechend gemildert bzw. die Bremsen gelöst werden. Bei Erreichen der gewünschten, schwächeren Bremsstufe bzw. des Lösens der Bremse wird der Betätigungshebel 79 freigegeben und damit die Nachspeisung von Hauptbehälterdruck in die Leitung 64 unterbrochen ; das Druckminderventil 59 kann daher trotz seines kleinen Durchströmungsquerschnittes den in der Leitung 64 herrschenden Druck rasch bis auf die zweite Regeldruckhöhe absenken, wodurch das Lösesteuerventil 29 in seine den Zwischendruckraum 21 wieder entlüftende Stellung zurückkehrt. Das Absperrventil 31 schließt sich infolgedessen und der augenblicklich in der Leitung 7 anstehende Steuerdruck bleibt nachspeisungsfrei erhalten.

Wird der Betätigungshebel 79 in der Betätigungsstellung Br « Bremsen » längere Zeit festgehalten, so wird, wie vorstehend bereits erwähnt, der in der Leitung 7 anstehende Steuerdruck abgesenkt. Sobald eine bestimmte Druckabsenkung erreicht ist, welche mit Sicherheit zum Erreichen der maximalen Bremsstufe der Fahrzeugbremsen ausreicht, vermag die Feder 41 des Durchgangsventils 38 den Kolben 42 zu verschieben, derart, daß die Einmündung der Kanalverbindung 37 in den Raum 39 abgesperrt wird. Damit vermag auch bei weiterhin geöffnet gehaltenem Auslaßventil des Bremssteuerventils 44 keine Druckluft aus der Leitung 7 mehr über die Düse 54 zur Atmosphäre abzuströmen, in der Leitung 7 und über das Relaisventil 1 in der Hauptluftleitung 3 wird damit ein gewisser Mindestdruck von beispielsweise 2,5 bar aufrechterhalten. Über das während der restlichen Betätigungszeit des Betätigungshebels 79 offengehaltene Auslaßventil 45 strömt lediglich die in den Räumen 39 und 43 vorhandene, geringe Druckluftmenge über die Düse 54 zur Atmosphäre ab. Hierdurch wird erreicht, daß beim nachfolgenden Bremsenlösen der Druck in der Hauptluftleitung nicht von Atmosphärendruck, sondern von der erwähnten Mindestdruckhöhe ausgehend angehoben werden muß, wodurch sich eine große Druckluftersparnis ergibt und das Lösen der Bremsen wesentlich rascher erfolgt.

Weiterhin ist noch hervorzuheben, daß bei einer nur kurzzeitigen Verstellung des Betätigungshebels 79 in die Betätigungsstellung Br « Bremsen » und damit nur einem kurzzeitigen Öffnen des Auslaßventils 45 des Bremssteuerventils 44, ausgehend von der Lösestellung, das Stufenventil 53 in der bereits beschriebenen Weise durch Einspeisen eines Druckluftstoßes in den Raum 52 betätigt wird und nach Öffnen seines Absperrventils 57 bis zum Erreichen einer die erste Bremsstufe sicherstellenden Druckabsenkung in der Leitung 7 betätigt bleibt, auch wenn vor Erreichen dieser Druckabsenkung der Betätigungshebel 79 bereits wieder freigegeben wird und damit das Auslaßventil 45 wieder schließt. Auch eine kurze Betätigung des Betätigungshebels 79 in die Stellung Br « Bremsen » gewährleistet somit ein Einsteuern der ersten Bremsstufe.

Wird der Betätigungshebel 79 in die Betätigungsstellung SB « Schnellbremsen » verstellt, so wird das Stößelventil 95 aufgestoßen und die Hauptluftleitung 3 über die Zweigleitung 96 über einen großen Querschnitt direkt in die Atmosphäre entlüftet. Über eine übliche, in Fig. 1 und 2 nicht dargestellte Zusatzeinrichtung an der Vorsteuereinrichtung 77 und am Relaisventil 1 wird letzteres dabei von der Hauptluftleitung 3 abgesperrt, derart, daß es in diese trotz Anstehen des Mindestdruckes in der Leitung 7 keine Druckluft nachspeisen kann. Diese Einrichtungen sind bekannt und brauchen daher hier nicht dargestellt und beschrieben zu werden. Die in die Raste 100 einfallende Rolle 98 hält den Betätigungshebel 79 auch nach seiner Freigabe in der Schnellbremsstellung, so daß diese selbsttätig beibehalten wird.

Es ist selbstverständlich möglich, das Führerbremsventil in vielfacher Weise abzuändern. So ist es insbesondere möglich, unter Verzicht auf eine Hauptbehälterdruck-Nachspeisung für die Leitung 64 in der Lösestellung die Leitung 73, die Drossel 72 und das Einlaßventil 70, 71 wegzulassen, derart, daß der Beaufschlagungsraum 69 ausschließlich über das Rückschlagventil 74 aus der Rohrleitung 75 füllbar ist. Weiterhin ist es möglich, das Druckminderventil 59 wegzulassen, das Absperrventil 65 anstelle mit dem Ausgang 63 über eine Düse mit der Regeldruck führenden Kanalverbindung 11 zu verbinden ; während der Steuerungsvorgänge sind dann allerdings gewisse Regeldruckschwankungen zu erwarten. Auch die bauliche Anordnung der einzelnen Teile der Ventileinheit 8 kann abweichend gewählt werden. Schließlich ist es auch möglich, das Relaisventil 1 und auch die Vorsteuereinrichtung 77 mit beliebigen, bekannten Zusatzeinrichtungen beispielsweise für ein Angleichen oder Absperren auszustatten.

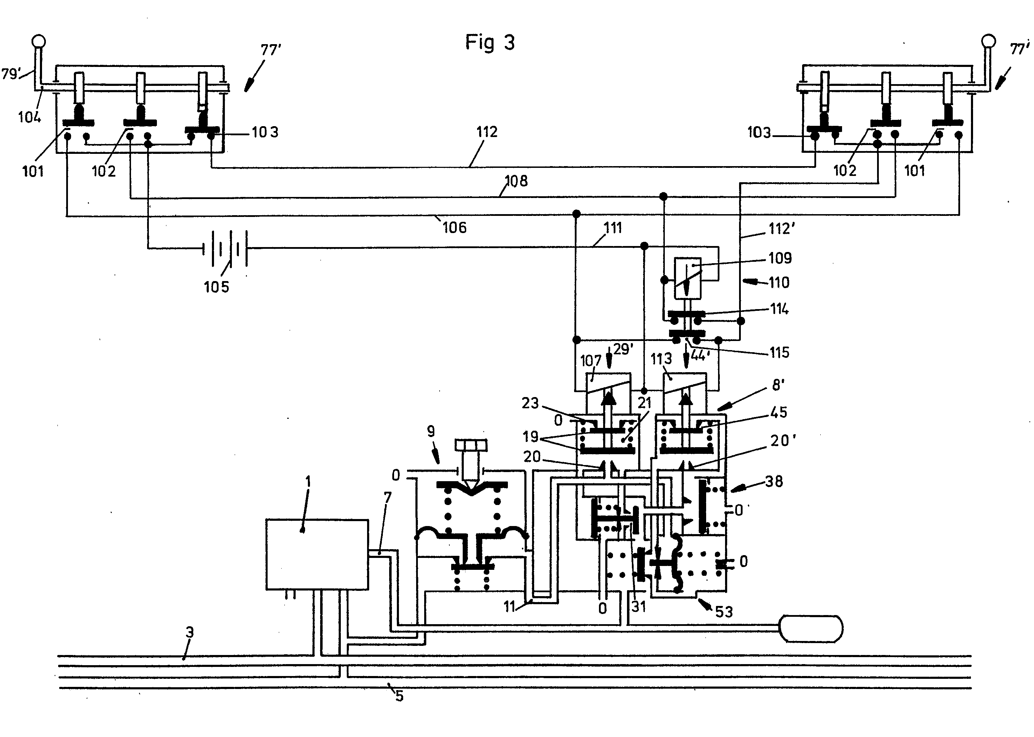

Bei der mit einem elektrischen Vorsteuermedium arbeitenden Führerbremsventilausführung nach Fig. 3 weisen die Vorsteuereinrichtungen 77' — in Fig. 3 sind zwei derartige Vorsteuereinrichtungen dargestellt — wenigstens drei Kontakte 101, 102 und 103 auf. Die Kontakte 101, 102 und 103 sind mittels einer Nockenwelle 104 schließbar, wozu die Nockenwelle 104 vermittels des Betätigungshebels 79' drehbar ist. In der Ruhestellung der Nockenwelle 104 und des Betätigungshebels 79' sind die beiden Kontakte 101 und 102 geöffnet, während der Kontakt 103 geschlossen ist. In einer der Betätigungsstellung Lö « Lösen » entsprechenden Drehlage der Nockenwelle 104 sind die Kontakte 101 und 103 geschlossen, während der Kontakt 102 geöffnet ist. In der in gleicher Drehrichtung nachfolgenden Betätigungsstellung Fü « Füllen » sind die Kontakte 102 und 103 geschlossen, während der Kontakt 101 geöffnet ist. Bei entgegengesetzter Drehung der Nockenwelle 104 wird die Betätigungsstellung Br « Bremsen » erreicht, in welcher die Kontakte 101, 102 und 103 geöffnet sind. Für Hilfsfunktionen können weitere Kontakteinrichtungen bzw. Notbremsventile in üblicher, nicht dargestellter Weise vermittels der Nockenwelle 104 schaltbar sein ; auch ist es möglich, die bekannte, nachfolgend nicht beschriebene Betätigungsstellung SB « Schnellbremsen » mit üblicher Abschaltung der gesamten Stromversorgung vorzusehen. Nach einer Freigabe des Betätigungshebels 79' kehrt dieser mit der Nockenwelle 104 selbsttätig, vermittels nicht dargestellter Federeinrichtungen, in die dargestellte Ruhestellung 0 zurück.

Die drei Kontakte 101, 102 und 103 der gemäß Fig. 3 links dargestellten Vorsteuereinrichtung 77' sind einerseits gemeinsam an eine Spannungsquelle 105 angeschlossen. Andererseits sind die einander entsprechenden Kontakte 101 der beiden Vorsteuereinrichtungen 77' gemeinsam an ein Lösekabel 106 angeschlossen, welches zur Erregungsspule 107 eines Lösesteuer-Magnetventils 29' führt. Die zweiten Seiten der Kontakte 102 der beiden Vorsteuereinrichtungen 77' sind gemeinsam an ein Haltekabel 108 angeschlossen, das zur Erregungsspule 109 eines Halterelais 110 führt. Andererseits ist die Erregungsspule 109 über ein Kabel 111 mit dem zweiten Pol der Spannungsquelle 105 verbunden. Die zweite Seite des Kontaktes 103 der links dargestellten Vorsteuereinrichtung 77' ist über ein Bremskabel 112 mit der entsprechenden Kontaktseite des Kontaktes 103 der rechts dargestellten Vorsteuereinrichtung 77' verbunden ; die miteinander verbundenen Kontaktseiten der Kontakte 101 und 102 und 103 der rechten Vorsteuereinrichtung 77' sind über einen Bremskabel-Abschnitt 112' gemeinsam einerseits an die Erregungsspule 113 eines Bremssteuer-Magnetventils 44' angeschlossen.

Es ergibt sich also, daß die Kontakte 101 und 102 beider Vorsteuereinrichtungen 77' zueinander parallel, die Kontakte 103 beider Vorsteuereinrichtungen 77' dagegen in Serie zueinander geschaltet sind. Bei Vorhandensein weiterer Vorsteuereinrichtungen wären deren Kontakte 103 entsprechend in Serie in den Bremskabel-Abschnitt 112' einzuschalten. Die zweiten Seiten der Erregungsspulen 107 und 113 stehen mit dem Kabel 111 in Verbindung.

Das Halterelais 110 weist zwei Kontakte 114 und 115 auf, die nur bei Erregung geschlossen sind. Der Kontakt 114 ist in eine Verbindung des Haltekabels 108 und der Kontakt 115 in eine Verbindung des Lösekabels 106 jeweils mit dem Bremskabel-Abschnitt 112′ eingeordnet.

Das Lösesteuer-Magnetventil 29′ hält im erregten Zustand das Entlüftungsventil 19, 23 für seinen Zwischendruckraum 21 geschlossen und das Durchgangsventil 19, 20 aus der Kanalverbindung 11 zum Zwischendruckraum 21 geöffnet ; im unerregten Zustand schaltet es die genannten Ventile um.

Das Bremssteuer-Magnetventil 44′ hält im erregten Zustand das Auslaßventil 45 geschlossen, im unerregten Zustand öffnet sich das Auslaßventil 45 unter der Kraft einer Feder. Im übrigen entspricht die Ventileinheit 8′ nach Fig. 3 der Ventileinheit 8 nach Fig. 1, wobei lediglich deren Selbsthaltevorrichtung 58 weggelassen und durch das Halterelais 110 ersetzt ist. Auch die Anordnung und Verschaltung des Relaisventils 1 des Führerbremsventils nach Fig. 3 entspricht der Fig. 1 und braucht daher hier nicht weiter erläutert zu werden. Es ist ersichtlich, daß in Fig. 3 weitgehend den Fig. 1 und 2 entsprechende Bezugszahlen für einander entsprechende Teile verwendet wurden.

Es ist erwähnenswert, daß das Lösesteuer-Magnetventil 29′ und das Bremssteuer-Magnetventil 44′ gleichartig ausgebildet werden können ; der dem Ventilsitz 20 des Lösesteuer-Magnetventils 29′ entsprechende Ventilsitz 20′ des Bremssteuer-Magnetventils 44′ ist dabei blind abzuschließen.

In der Ruhestellung o nach vorangehender Betätigungsstellung Fü « Füllen » einer der Vorsteuereinrichtungen 77′ nimmt das Führerbremsventil nach Fig. 3 die dargestellte Schaltstellung ein. Die Kontakte 103 sind geschlossen und die Kontakte 101 und 102 sind geöffnet. Von der Spannungsquelle 105 wird über die in Serie geschalteten Kontakte 103 beider Vorsteuereinrichtungen 77′ sowie das Bremskabel 112, 112′ das Bremssteuerventil 44′ erregt und damit das Auslaßventil 45 geschlossen gehalten. Über den geschlossenen Kontakt 114 wird auch das Halterelais 110 erregt gehalten, und der Kontakt 115 schließt die Erregungsspule 107 des Lösesteuer-Magnetventils 29′ an die Spannungsquelle 105 an. Das Lösesteuer-Magnetventil 29′ hält daher das Durchgangsventil 19, 20 geöffnet und das Entlüftungsventil 19, 23 geschlossen. Die Ventileinheit 8′ steuert somit in die Leitung 7, wie vorstehend zu Fig. 1 beschrieben, über den Druckregler 9 nachspeisend Regeldruckhöhe ein.

Wird an einer der Vorsteuereinrichtungen 77′ die Betätigungsstellung Br « Bremsen » eingestellt, so wird für die Zeitdauer dieser Betätigung durch Öffnen des entsprechenden Kontaktes 103 die Spannungsführung des Bremskabel-Abschnittes 112′ unterbrochen. Das Halterelais 110 fällt daher ebenso wie das Lösesteuer-Magnetventil 29′ und das Bremssteuer-Magnetventil 44′ ab. Die Kontakte 114 und 115 öffnen sich, das Lösesteuer-Magnetventil 29′ schließt das Durchgangsventil 19, 20 und öffnet das Entlüftungsventil 19, 23, und das Bremssteuer-Magnetventil 44′ öffnet das Auslaßventil 45. Wie zu Fig. 1 beschrieben, wird damit der Druck in der Leitung 7 um zumindest einen ein Erreichen der ersten Bremsstufe sicherstellenden Wert abgesenkt. Nach Freigeben der betätigten Vorsteuereinrichtung 77′ kehrt diese in ihre Ruhestellung o unter Schließen des Kontaktes 103 zurück ; dabei kann jedoch nurmehr das Bremssteuer-Magnetventil 44′ erregt werden und sein Auslaßventil 45 schließt sich, womit die Druckabsenkung in der Leitung 7 beendet wird und die augenblicklich erreichte Bremsstellung, zumindest die erste Bremsstufe, erhalten bleibt. Die geöffneten Kontakte 114 und 115 unterbinden dabei eine Erregung auch des Halterelais 110 und des Lösesteuer-Magnetventils 29′.

Zum nachfolgenden, vollständigen Lösen der Bremsen wird an einer der Vorsteuereinrichtungen 77′ der Betätigungshebel 79′ wenigstens kurzzeitig in die Betätigungsstellung Fü « Füllen » verstellt, wobei zusätzlich zum Kontakt 103 der Kontakt 102 geschlossen wird. Über das Haltekabel 108 wird somit die Erregungsspule 109 des Halterelais 110 an Spannung gelegt, das Halterelais 110 zieht an und schließt seine Kontakte 114 und 115. Über den Kontakt 114 bleibt das Halterelais 110 auch nach Freigabe des Handhebels 79′ und Rückkehr der Vorsteuereinrichtung 77′ in die Ruhestellung o erregt und über den Kontakt 115 wird die Erregungsspule 107 des Lösesteuer-Magnetventils 29′ an Spannung gelegt. Das Lösesteuer-Magnetventil 29′ wird somit erregt und öffnet das Durchgangsventil 19, 20 und schließt das Entlüftungsventil 19, 23, so daß der Zwischendruckraum 21 von der Atmosphäre abgetrennt und aus der Kanalverbindung 11 mit Regeldruckhöhe beaufschlagt wird. Der Lösevorgang läuft dann weiter, wie zu Fig. 1 beschrieben, bis zum vollständigen Lösen der Fahrzeugbremsen ab. Damit ist der in Fig. 3 dargestellte Schaltzustand wieder erreicht. Es ist wesentlich, daß zum vollständigen Lösen der Fahrzeugbremsen nur kurzzeitig die Betätigungsstellung Fü « Füllen » an einer Vorsteuereinrichtung 77′ eingestellt werden muß, der vollständige Lösevorgang sodann automatisch abläuft und das Führerbremsventil in eine Schaltstellung gelangt, in welcher der Druckregler 9 die Regeldruckhöhe in der Leitung 7 nachspeisend aufrecht erhält. Das Führerbremsventil nach Fig. 3 weist in dieser Hinsicht also die gleichen Eigenschaften auf, wie sie zum Führerbremsventil nach Fig. 1 und 2 beschrieben wurden.

Soll, ausgehend vom beschriebenen Bremszustand, nur ein teilweises Lösen der Bremsen bzw. ein vollständiges Bremsenlösen ohne vollständige Nachspeisewirkung erreicht werden, so ist an einer der Vorsteuereinrichtungen 77′ der Betätigungshebel 79′ aus der Ruhestellung o in die Betätigungsstellung Lö « Lösen » zu verstellen, wobei sich zusätzlich zum Kontakt 103 der Kontakt 101 schließt. Bei noch abgefallenem Halterelais 110 wird über den Kontakt 101 und das Lösekabel 106 das Lösesteuer-Magnetventil 29' für die Zeitdauer des Haltens der Betätigungsstellung Lö « Lösen » erregt und öffnet demgemäß für die Zeitdauer das Durchgangsventil 19, 20 und schließt das Entlüftungsventil 19, 23. Demgemäß strömt während der Zeitdauer der Erregung des Lösesteuer-Magnetventils 29' aus der Kanalverbindung 11 Druckluft durch das Durchgangsventil 19, 20 in den für diese Zeitdauer von der Atmosphäre abgetrennten Zwischendruckraum 21, öffnet für diese Zeitdauer das Absperrventil 31 und bewirkt in der Leitung 7 einen der Betätigungsdauer entsprechenden Druckanstieg. Nach Freigabe des Betätigungshebels 79' kehrt dieser selbsttätig in die Ruhestellung o zurück, das Lösesteuer-Magnetventil 29' fällt wieder ab, der Zwischendruckraum 21 wird über das sich öffnende Entlüftungsventil 19, 23 in die Atmosphäre entleert und das Absperrventil 31 schließt sich. Der augenblicklich in der Leitung 7 herrschende Druck wird somit nachspeisungsfrei erhalten und über das Relaisventil 1 auf die Hauptluftleitung 3 übertragen. Der entlüftete Zwischendruckraum 21 stellt sicher, daß auch bei undichten Ventilen kein ungewollter Druckanstieg in der Leitung 7 und damit kein ungewolltes, weiteres Lösen der Bremsen eintreten kann. Auch in dieser Funktionshinsicht entspricht somit das Führerbremsventil nach Fig. 3 demjenigen nach Fig. 1 und 2.

Es ist festzustellen, daß bei den Führerbremsventilen nach Fig. 1 und 2 und nach Fig. 3 trotz Verwendung unterschiedlicher, pneumatischer bzw. elektrischer Vorsteuermedien die Ventileinheiten 8 und 8' in ihren Hauptteilen gleichartig aufgebaut sind, lediglich die Lösesteuer- bzw. Bremssteuerventile und die Selbsthaltevorrichtung an das Vorsteuermedium angepaßt werden müssen. Auch die Funktionen der Führerbremsventile entsprechen einander, wobei besonders hervorzuheben ist, daß auch bei Verwendung eines pneumatischen Vorsteuermediums die Leitungslängen bzw. -volumen des Vorsteuerkreises praktisch keinen Einfluß auf das Steuerungsverhalten des Führerbremsventils nehmen.

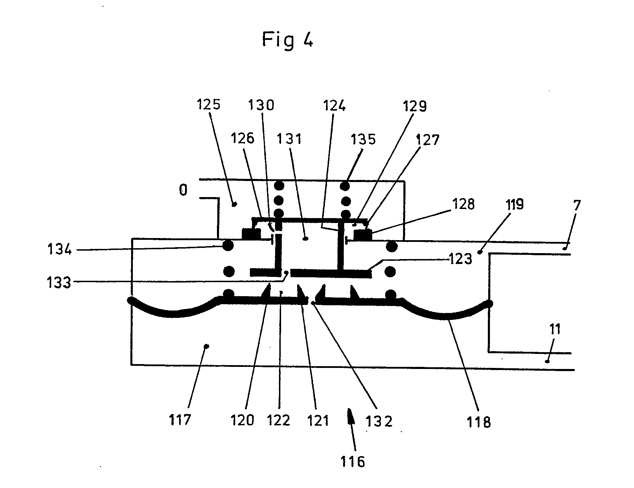

Eine Vereinfachung der vorstehend beschriebenen Führerbremsventile unter Beibehaltung ihrer Sicherheitsfunktionen kann durch Verwendung einer selbsttätigen Nachspeisevorrichtung 116 gemäß Fig. 4 erreicht werden. Bei gelösten Fahrzeugbremsen, also Regeldruckhöhe in der Leitung 7, ergibt sich dabei unabhängig von vorausgehenden Betätigungseinstellungen der Vorsteuereinrichtungen 77 bzw. 77' stets eine selbsttätige Regeldrucknachspeisung vom Druckregler 9 zur Leitung 7, die Betätigungsstellung Fü « Füllen » kann daher entfallen.

Die in nicht dargestellter Weise in die Ventileinheit 8 oder 8' einbezogene Nachspeisevorrichtung 116 gemäß Fig. 4 weist eine an die Kanalverbindung 11 angeschlossene und somit ständig mit Regeldruckhöhe beaufschlagte Kammer 117 auf, welche mittels eines Membrankolbens 118 von einer weiteren Kammer 119 abgetrennt ist, welche ständig mit der Leitung 7 in Verbindung steht und daher den Steuerdruck für das Relaisventil 1 führt. Auf Seiten der Kammer 119 trägt der Membrankolben 118 in seinem mittleren Abschnitt zwei zueinander konzentrische Ventilsitze 120 und 121, welche einen Ringraum 122 umschließen. Den beiden Ventilsitzen 120 und 121 steht eine in der Kammer 119 angeordnete Ventildichtplatte 123 gegenüber, welche auf der den Ventilsitzen abgewandten Seite mit einem Rohransatz 124 abgedichtet verschieblich in einer Wandung des Gehäuses der Nachspeisevorrichtung 116 geführt ist. Außerhalb der Kammer 119, in einer ständig mit der Atmosphäre 0 verbundenen Kammer 125, ist der Rohransatz 124 durch eine Platte 126 abgedeckt, welche einen größeren Durchmesser als der Rohransatz 124 aufweist und an ihrem äußeren Rand einen Ventilsitz 127 trägt. Dem Ventilsitz 127 steht ein an der Gehäusewandung angeordneter Ventildichtring 128 gegenüber. Der zwischen dem Rohransatz 124 und dem Ventilsitz 127 gebildete Ringraum 129 steht über eine Öffnung 130 im Rohransatz 124 in ständiger Verbindung mit dem Innenraum 131 des Rohransatzes 124. Der Membrankolben 118 weist innerhalb des inneren Ventilsitzes 121 eine kleinquerschnittige, eine Drossel darstellende Durchbrechung 132 auf und die Ventildichtplatte 123 ist im Bereich zwischen den Ventilsitzen 120 und 121, also im Bereich des Ringraumes 122, mittels einer Öffnung 133 durchbrochen. In der Kammer 119 befindet sich eine den Membrankolben 118 in Öffnungsrichtung des aus den Ventilsitzen 120, 121 und der Ventildichtplatte 123 gebildeten Absperrventils belastende Feder 134 und die Platte 126 ist von einer in Schließrichtung des aus dem Ventilsitz 127 und dem Ventildichtring 128 gebildeten, weiteren Absperrventils 127, 128 wirkenden Feder 135 belastet.

Bei Einordnen der Nachspeiseeinrichtung 116 in die Ventileinheit 8 oder 8' können die Selbsthaltevorrichtung 58 bzw. das Halterelais 110 sowie die Betätigungsstellung Fü « Füllen » entfallen. In der Ruhestellung o der Vorsteuereinrichtungen 77 bzw. 77' hält daher das Lösesteuerventil 29, 29' das Durchgangsventil 19, 20 stets geschlossen und den Zwischendruckraum 21 entlüftet.

Bei gelösten Bremsen nimmt die Nachspeisevorrichtung 116 die aus Fig. 4 ersichtliche Schaltstellung ein, wobei in den Kammern 117 und 119 sowie im Innenraum 131 und im Ringraum 129 Regeldruckhöhe herrscht. Die Feder 134 hält die Ventilsitze 120 und 121 von der Ventildichtplatte 123 abgehoben, so daß das Absperrventil 120, 121, 123 geöffnet ist und vom Druckregler 9 über die Kanalverbindung 11 und durch die Durchbrechung 132 in die Leitung 7 Regeldruckhöhe nachspeisbar ist. Die Feder 135 drückt den Ventilsitz 127 gegen den Ventildichtring 128 und hält somit das weitere Absperrventil 127, 128 geschlossen.

Wird zum Bremsen der Druck in der Leitung 7 durch entsprechende Betätigung des Bremssteuerventils 44, 44' bei weiterhin geschlossenem Durchgangsventil 19, 20 abgesenkt, so kann durch die Durchbrechung 132 nur eine geringe Druckluftmenge aus der Kammer 117 zur Kammer 119 überströmen und zwischen diesen Kammern tritt eine Druckdifferenz auf, welche den Membrankolben 118 belastet und diesen in Richtung zur Kammer 119, entgegen der Kraft der Feder 134, verschiebt. Die Ventilsitze 120, 121 setzen sich auf die Ventildichtplatte 123 auf und sperren somit durch Schließen des Absperrventils 120, 121, 123 eine weitere Druckluftnachströmung aus der Kammer 117 zur Kammer 119 ab. Damit ist die Regeldruck-Nachspeisung zur Leitung 7 unterbrochen. Bei der weiteren Bewegung des Membrankolbens 118 wird die Ventildichtplatte 123 mitgenommen, wobei der Ventilsitz 127 entgegen der Kraft der Feder 135 vom Ventildichtring 128 abgehoben wird und das weitere Absperrventil 127, 128 somit geöffnet wird. Der Ringraum 122, die Öffnung 133, den Innenraum 131, die Öffnung 130, den Ringraum 129, das geöffnete Absperrventil 127, 128 und die Kammer 125 werden in die Atmosphäre entlüftet. Diese Schaltstellung hält die Nachspeisevorrichtung während des gesamten Bremsvorganges bei. Es ist wesentlich, daß auch bei undichten Ventilen hierbei kein ungewollter Druckanstieg in der Leitung 7 auftreten kann, da in den Verbindungen vom Druckregler 9 sowohl über das Lösesteuerventil 29, 29' wie auch über die Nachspeisevorrichtung 116 zur Leitung 7 jeweils Atmosphärendruck führende Zwischenräume, nämlich der Zwischendruckraum 21 bzw. der Ringraum 122, vorhanden sind.

Zum nachfolgenden Bremsenlösen wird eine Vorsteuereinrichtung 77, 77' bis zum Erreichen des gewünschten Lösezustandes bzw. des vollständigen Bremsenlösens in die Schaltstellung Lö « Lösen » verstellt. Das Lösesteuerventil 29, 29' speist während dieser Zeit Druckluft aus der Kanalverbindung 11 in die Leitung 7 ein und bewirkt in dieser eine den Lösevorgang steuernde Druckanhebung. Kurz vor Erreichen der Regeldruckhöhe in der Leitung 7, bei Überschreiten des der ersten Bremsstufe entsprechenden Druckes, vermag die Feder 134, anfänglich unterstützt durch die Feder 135, den Membrankolben 118 wieder in Richtung zur Kammer 117 zurückzudrücken, wobei zuerst das Absperrventil 127, 128 unter der Kraft der Feder 135 geschlossen und damit die Verbindung des Ringraumes 122 zur Atmosphäre unterbrochen wird. Nachfolgend heben sich die Ventilsitze 120, 121 von der Ventildichtplatte 123 ab und die Nachspeisevorrichtung 116 kehrt in die in Fig. 4 dargestellte Schaltstellung zurück. Die vom Druckregler 9 überwachte Regeldruckhöhe kann dann durch die Durchbrechung 132 in die Kammer 119 und die Leitung 7 einströmen und in dieser eine restliche Druckanhebung bis auf Regeldruckhöhe bewirken. Damit ist der Lösezustand wieder erreicht.

Eine Vereinfachung des vorstehend beschriebenen Führerbremsventils ist durch Verwendung einer einfachen Nachspeisevorrichtung anstelle der Nachspeisevorrichtung 116 erreichbar. Die vereinfachte Nachspeisevorrichtung weist an ihrem Membrankolben lediglich einen dessen Durchbrechung umgebenden Ventilsitz auf, welcher mit der gehäusefest angeordneten Ventildichtplatte zusammenwirkt. Das zweite Absperrventil und die Ringräume entfallen somit. Bei Verwendung einer derartigen Nachspeisevorrichtung kann auch die Ventileinheit 8 bzw. 8' vereinfacht werden : Am Lösesteuerventil 29, 29' ist lediglich das in der Ruhestellung der Vorsteuereinrichtung 77, 77' geschlossene Durchgangsventil 19, 20 erforderlich, das Entlüftungsventil 19, 23, der Zwischendruckraum 21 und das Absperrventil 31 mit dem Kolben 33 und der Feder 34 können entfallen. Das Durchgangsventil 19, 20 überwacht dann eine unmittelbare Verbindung von der Kanalverbindung 11 zur Leitung 7. Bei dieser Ausführung können allerdings durch Ventilundichtheiten während des Bremszustandes ungewollte Drucksteigerungen in der Leitung 7 mit deren Folgen auftreten.

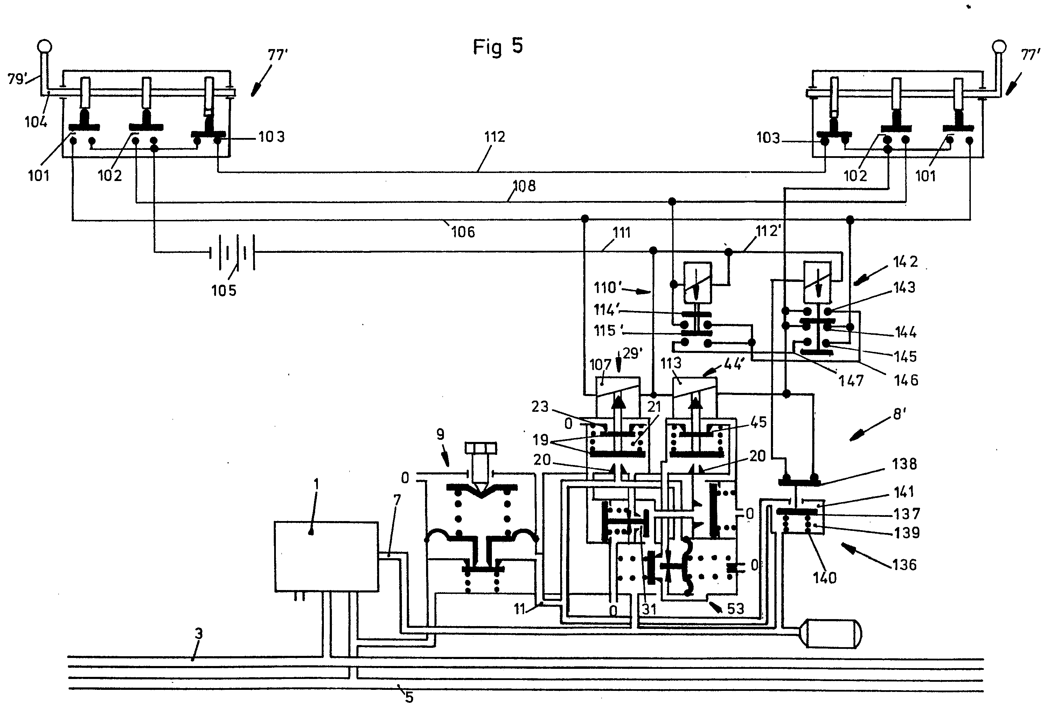

Ausgehend von einen Führerbremsventil nach Fig. 3 kann es abweichend zu der dort beschriebenen Funktionsweise auch wünschenswert sein, daß das Führerbremsventil nicht nur bei Einstellen der Ruhestellung 0 nachfolgend zu einer Betätigung in die Stellung Füllen Fü, sondern auch bei Einstellen der Ruhestellung 0 nachfolgend zu einer Betätigung in die Stellung Lösen Lö, wenn in dieser ein vollständiges Lösen bewirkt wurde, nachspeisend wirkt. Zum Erzielen dieser Funktionsweise ist das Führerbremsventil in der aus Fig. 5 ersichtlichen Weise abzuwandeln.

Gemäß Fig. 5 ist, ausgehend von einem Führerbremsventil nach Fig. 3, die Ventileinheit 8' zusätzlich mit einem Differenzdruckschalter 136 versehen, dessen Kolbenglied 137 in Schließrichtung seines Kontaktes 138 vom Steuerdruck in einem an die Leitung 7 angeschlossenen Raum 139 und der Kraft einer Feder 140, entgegengesetzt von der Regeldruckhöhe des Druckreglers 9 in einem an die Kanalverbindung 11 angeschlossenen Raum 141 beaufschlagt ist. Der Differenzdruckschalter 136 ist derart ausgelegt, daß er den Kontakt 138 nur bei zumindest geringfügig, beispielsweise um wenigstens etwa 0,2 bar die Regeldruckhöhe in Kammer 141 unterschreitender Steuerdruckhöhe in Kammer 139 geöffnet, ansonsten geschlossen hält. Weiterhin ist zusätzlich zum dem Halterelais 110 nach Fig. 3 entsprechenden Halterelais 110' mit den Kontakten 114' und 115' ein Relais 142 mit drei Kontakten 143, 144 und 145 vorgesehen. Bei unerregtem Relais 142 ist der Kontakt 144 geöffnet und sind die Kontakte 143 und 145 geschlossen, bei erregtem Relais 142 nehmen die Kontakte 143, 144 und 145 umgekehrte Schaltstellungen ein.

Der Abschnitt 112' des Bremskabels führt zur Erregungsspule 113 des Bremssteuermagnetventils 44', zur einen Seite des Kontaktes 138 des Differenzdruckschalters 136 und zu den einen Seiten der Kontakte 143 und 144. Die Spule des Relais 142 ist einerseits über das Kabel 111 an die Spannungsquelle 105 angeschlossen und andererseits an die zweite Seite des Kontaktes 138 angeschlossen. Der Kontakt 114' ist zwischen das Haltekabel 108 und ein Kabel 146, der Kontakt 115' zwischen das Kabel 146 und ein weiteres Kabel 147, der Kontakt 143 zwischen den Abschnitt 112' des Bremskabels und das Kabel 146, der Kontakt 144 zwischen den Abschnitt 112' des Bremskabels und das Lösekabel 106 und der Kontakt 145 zwischen das Kabel 147 und das Lösekabel 106 eingeschaltet.

Im übrigen entspricht der Aufbau und die Verschaltung des Führerbremsventils nach Fig. 5 dem Führerbremsventil nach Fig. 3 ; gleiche Teile sind in Fig. 3 und Fig. 5 mit gleichen Bezugszeichen versehen. Zur Erläuterung sind in Fig. 5 eine Reihe von Bezugszahlen eingetragen, die den Bezugszahlen nach Fig. 3 entsprechen und deren Bedeutung der Beschreibung zu Fig. 3 entnehmbar ist.

Im selbstnachspeisenden Lösezustand der Bremsen nimmt das Führerbremsventil die aus Fig. 5 ersichtliche Schaltstellung ein. Die Vorsteuereinrichtungen 77' befinden sich in ihren Ruhestellungen 0, das Relais 142 ist über den spannungsführenden Abschnitt 112' des Bremskabels und den bei angeglichener Regel- und Steuerdruckhöhe geschlossenen Kontakt 138 des Differenzdruckschalters 136 erregt. Das Bremssteuermagnetventil 44' ist erregt und über den Kontakt 144 und das Lösekabel 106 ist auch das Lösesteuermagnetventil 29' erregt, wodurch die Ventileinheit 8' wie zu Fig. 3 beschrieben den Steuerdruck in Leitung 7 nachspeisend auf Regeldruckhöhe hält. Das Halterelais 110' ist dabei abweichend zu Fig. 3 jedoch unerregt.

Wird zum Bremsen an einer Vorsteuereinrichtung 77' für eine der gewünschten Bremsstärke entsprechende Zeitspanne durch vorübergehendes Einstellen der Betätigungsstellung Br « Bremsen » ein Kontakt 103 geöffnet, so fallen das Bremssteuermagnetventil 44' und das Relais 142 und damit auch vorübergehend das Lösesteuermagnetventil 29' ab. Der Steuerdruck in der Leitung 7 wird daher wie zu Fig. 3 beschrieben abgesenkt und der Kontakt 138 öffnet sich. Wird nach Erreichen der gewünschten Bremsstufe der Kontakt 103 wieder geschlossen, so wird zwar das Bremssteuermagnetventil 44' wieder erregt, das Relais 142 bleibt bei geöffnetem Kontakt 138 jedoch unerregt und auch das Lösesteuer magnetventil 29' wird nicht erregt.

Zum nachfolgenden, vollständigen Lösen kann eine der Vorsteuereinrichtung 77' wenigstens kurzzeitig in die Betätigungsstellung Fü « Füllen » bewegt werden ; über den dabei wenigstens kurzzeitig geschlossenen Kontakt 102 wird das Halterelais 110' erregt, über den sich schließenden Kontakt 114' wird das Haltekabel 108 mit dem über Kontakt 143 spannungsführenden Kabel 146 verbunden, so daß das Halterelais 110' auch bei wieder geöffnetem Kontakt 102 erregt bleibt. Über den sich schließenden Kontakt 115' wird zudem das spannungsführende Kabel 146 mit Kabel 147 und über den geschlossenen Kontakt 145 mit dem Lösekabel 106 verbunden. Damit wird das Lösesteuermagnetventil 107 erregt und bewirkt wie zu Fig. 3 beschrieben ein Anheben des Steuerdruckes in Leitung 7 auf Regeldruckhöhe und damit ein Lösen der Bremsen. Unmittelbar vor dem Angleichen der Steuer- an die Regeldruckhöhe schließt der Kontakt 138 und das Relais 142 wird erregt. Dabei wird das Lösekabel 106 über den sich schließenden Kontakt 144 an den spannungsführenden Abschnitt 112' des Bremskabels angeschlossen und das Lösesteuermagnetventil 29' bleibt trotz Abfallens des Halterelais 110', bewirkt durch Öffnen des Kontaktes 143, erregt. Damit ist der in Fig. 5 dargestellte Schaltzustand mit Nachspeisefunktion wieder erreicht.

Das vollständige Lösen mit nachfolgender Nachspeisefunktion kann jedoch auch erreicht werden durch Verstellen einer Vorsteuereinrichtung 77' in die Betätigungsstellung Lö « Lösen » und Halten dieser Vorsteuereinrichtung in dieser Betätigungsstellung bis zum Erreichen des Lösens, d. h., bis der Steuerdruck wenigstens annähernd bis auf Regeldruckhöhe gestiegen ist. Durch Schließen des Kontaktes 101 wird hierbei zusätzlich zum Bremssteuermagnetventil 44' das Lösesteuermagnetventil 29' erregt, wodurch wie zu Fig. 3 beschrieben der Steuerdruck gesteigert wird. Etwa bei Angleichung des Steuerdruckes an die Regeldruckhöhe schließt sich der Kontakt 138 und das Relais 142 wird erregt, wodurch auch bei nachfolgendem Öffnen des Kontaktes 101 das Lösesteuermagnetventil 29' über den Kontakt 144 erregt bleibt. Damit ist die in Fig. 5 dargestellte Schaltstellung wieder erreicht.

Soll nur um eine Stufe, nicht bis zum vollständigen Lösen gelöst werden, so muß der Kontakt 101 bei Erreichen der gewünschten Lösestufe, vor Schließen des Kontaktes 138, geöffnet werden : Das Lösemagnetventil 29' fällt dabei wieder ab und der augenblicklich erreichte Bremszustand mit noch unter der Regeldruckhöhe liegendem Steuerdruck bleibt bestehen.

Abweichend zur schematischen Darstellung nach Fig. 5 ist es zweckmäßig, den Differenzdruckschalter 136 baulich in die Ventileinheit 8' zu integrieren.

## Ansprüche

1. Führerbremsventil für indirekte Druckluftbremsen von Schienenfahrzeugen, mit willkürlich in Richtung « Lösen » und « Bremsen » betätigbaren, nach ihrer Betätigung selbsttätig in eine mittlere Ruhestellung zurückkehrenden Vorsteuereinrichtungen (77, 77') zum Steuern eines Vorsteuermediums, mit einem entsprechend der Steuerung des Vorsteuermediums in Abhängigkeit von der Betätigungszeit der Vorsteuereinrichtungen (77, 77') steuerbaren, selbstschließenden Relaisventil (1) zur Überwachung eines Hauptluftleitungsdruckes, und mit einem einen Regeldruck abgebenden Druckregler (9) zur Erstellung eines mittels des Vorsteuermediums in seiner Druckhöhe beeinflußbaren Steuerdruckes für das Relaisventil (1), wobei je ein vom Vorsteuermedium schaltbares Löse- und Bremssteuerventil (29 bzw. 29' und 44 bzw. 44') vorhanden ist, das Lösesteuerventil (29 bzw. 29') ein eine Verbindung vom Druckregler (9) zu einem vom Steuerdruck beaufschlagten Raum (32, 35) überwachendes Durchgangsventil (19, 20) und das Bremssteuerventil (44 bzw. 44') ein Auslaßventil (45) für den den Steuerdruck führenden Raum (32, 35) aufweist, und wobei in der Betätigungsstellung « Lösen » der Vorsteuereinrichtungen (77, 77') sich das Lösesteuerventil (29 bzw. 29') in seiner Schaltstellung mit geöffnetem Durchgangsventil (19, 20) und das Bremssteuerventil (44 bzw. 44') in seiner Schaltstellung mit geschlossenem Auslaßventil (45), in der « Ruhestellung » der Vorsteuereinrichtungen (77 bzw. 77') sich das Bremssteuerventil (44 bzw. 44') in seiner Schaltstellung mit geschlossenem Auslaßventil (45), und in der Betätigungsstellung « Bremsen » der Vorsteuereinrichtungen (77 bzw. 77') sich das Lösesteuerventil (29 bzw. 29') in seiner Schaltstellung mit geschlossenem Durchgangsventil (19, 20) und das Bremssteuerventil (44 bzw. 44') in seiner Schaltstellung mit geöffnetem Auslaßventil (45) befinden, dadurch gekennzeichnet, daß das Lösesteuerventil (29 bzw. 29') ein Doppelventil aufweist, welches das in die Verbindung vom Druckregler (9) zu einem Zwischendruckraum (21) eingeordnete Durchgangsventil (19, 20) und ein entgegengesetzt zu diesem schaltbares Entlüftungsventil (19, 23) für den Zwischendruckraum (21) umfaßt, und daß der Zwischendruckraum (21) über ein nur bei seiner Druckbeaufschlagung öffenbares Absperrventil (31) mit dem den Steuerdruck für das Relaisventil (1) führenden Raum (32, 35) verbunden ist.

2. Führerbremsventil nach Anspruch 1, dadurch gekennzeichnet, daß in einer weiteren Betätigungsstellung « Füllen » der Vorsteuereinrichtungen (77 bzw. 77') sich das Lösesteuerventil (29 bzw. 29') in seiner Schaltstellung mit geöffnetem Durchgangsventil (19, 20) und das Bremssteuerventil (44 bzw. 44') in seiner Schaltstellung mit geschlossenem Auslaßventil (45) befinden und daß eine nur in dieser Betätigungsstellung vom Vorsteuermedium erregbare Selbsthaltevorrichtung (58 bzw. Halterelais 110) vorgesehen ist, welche nach ihrer Erregung bis zu einem nachfolgenden Einstellen der Betätigungsstellung « Bremsen » selbsterregt bleibt und welche in ihrer Erregungsstellung das Lösesteuerventil (29 bzw. 29') in dessen der Betätigungsstellung « Lösen » der Vorsteuereinrichtung (77 bzw. 77') entsprechender Schaltstellung hält.

3. Führerbremsventil nach Anspruch 1 oder 2, dadurch gekennzeichnet, daß das Absperrventil (31) von einem Kolben (33) gesteuert ist, der in Öffnungsrichtung vom Druck im Zwischendruckraum (21) und andererseits von einer Feder (34) belastet ist.

4. Führerbremsventil nach Anspruch 1, 2 oder 3, dadurch gekennzeichnet, daß dem Auslaßventil (45) des Bremssteuerventils (44 bzw. 44') ein bei Unterschreiten einer Mindestdruckhöhe des Steuerdruckes schließendes, zweites Durchgangsventil (38) vor- oder nachgeschaltet ist.

5. Führerbremsventil nach einem oder mehreren der Ansprüche 1 bis 4, dadurch gekennzeichnet, daß ein Stufenventil (53) vorgesehen ist, welches ein in eine zum Auslaßventil (45) des Bremssteuerventils (44 bzw. 44') parallele, von dem mit dem Steuerdruck beaufschlagten Raum (32 bzw. Leitung 7) zu einer Entlüftungsdüse (54) führende Verbindung eingeordnetes Absperrventil (57) aufweist, das von einem Kolbenglied (55) gesteuert ist, welches in Öffnungsrichtung des Absperrventils (57) vom Druck vor der Entlüftungsdüse (54) und der Kraft einer Feder (56) andererseits vom Regeldruck belastet ist.

6. Führerbremsventil nach Anspruch 1, dadurch gekennzeichnet, daß in eine gedrosselte Verbindung (Durchbrechung 132) von einem mit dem Regeldruck des Druckreglers (9) beaufschlagten Raum (Kammer 117) zu einem den Steuerdruck des Relaisventils (1) führenden Raum (Kammer 119) ein Absperrventil (120, 121, 123) eingeordnet ist, das von einem in Schließrichtung vom Regeldruck und entgegengesetzt vom Steuerdruck und der Kraft einer Feder (134) belasteten Kolbenglied (118) betätigbar ist (Fig. 4).

7. Führerbremsventil nach Anspruch 6, dadurch gekennzeichnet, daß das Absperrventil (120, 121, 123) zwei konzentrische, einen Ringraum (122) umschließende Ventilsitze (120 und 121) aufweist, und daß ein nur bei geschlossenem Absperrventil (120, 121, 123) geöffnetes, weiteres Absperrventil (127, 128) in einer Verbindung vom Ringraum (129) zur Atmosphäre vorhanden ist (Fig. 4).

8. Führerbremsventil nach einem oder mehreren der vorstehenden Ansprüche, dadurch gekennzeichnet, daß als Vorsteuermedium ein pneumatischer Vorsteuerdruck vorgesehen ist, daß jede Vorsteuereinrichtung (77) ein in den Betätigungsstellungen « Füllen » und « Lösen » geöffnetes Einlaßventil (85, 88) aus einer Druckluftvorratsquelle (Hauptbehälterleitung 5) in einen mit einem ersten Vorsteuerdruck gefüllten Raum (81) und ein in der Betätigungsstellung « Bremsen » geöffnetes Auslaßventil (83, 85) aus diesem Raum (81) aufweist, daß nahe des Relaisventils (1) ein Druckminderventil (59) vorgesehen ist, das auf eine den Druck der Druckluftvorratsquelle (Hauptbehälterleitung 5) unterschreitende Vorsteuer-Regeldruck höhe eingestellt und dessen Ausgang (63) mit einem den ersten Vorsteuerdruck führenden Raum (Leitung 64) verbunden ist, daß das Lösesteuerventil (29) von einem ersten Kolben (26) gesteuert ist, der in Öffnungsrichtung des Durchgangsventils (19, 20) vom ersten Vorsteuerdruck entgegen der Kraft einer ersten Feder (28) beaufschlagt ist, wobei die erste Feder (28) nur bei Belastung des ersten Kolbens (26) mit einer die Vorsteuer-Regeldruckhöhe überschreitenden Druckhöhe komprimierbar ist, und daß das Bremssteuerventil (44) von einem zweiten Kolben (48) gesteuert ist, der in Schließrichtung des Auslaßventils (45) vom ersten Vorsteuerdruck entgegen der Kraft einer zweiten Feder (49) belastet ist, wobei die zweite Feder (49) bei Belastung des zweiten Kolbens (48) mit der Vorsteuer-Regeldruckhöhe komprimierbar ist (Fig. 1 und 2).

9. Führerbremsventil nach Anspruch 2 und 8, dadurch gekennzeichnet, daß jede Vorsteuereinrichtung (77) ein zweites Ein- und Auslaßventil (85', 88' und 83', 85') zum Steuern eines zweiten Vorsteuerdruckes aufweist, wobei das zweite Einlaßventil (85', 88') nur in der Betätigungsstellung « Füllen » zur Verbindung eines den zweiten Vorsteuerdruck führenden Raumes (92) mit der Druckluftvorratsquelle (Hauptbehälterleitung 5) geöffnet, das zweite Auslaßventil (83', 85') in allen anderen Stellungen der Vorsteuereinrichtung (77) geöffnet ist, und daß die Selbsthaltevorrichtung (58) ein zwischen dem Ausgang (63) des Druckminderventils (59) und einem den ersten Vorsteuerdruck führenden Raum (Leitung 64) eingeordnetes Absperrventil (65) aufweist, das von einem dritten Kolben (68) entgegen der Kraft einer dritten Feder (67) gesteuert ist, wobei der dritte Kolben (68) in Schließrichtung des Absperrventils (65) vom Druck in einen Beaufschlagungsraum (69) belastet ist, der über ein Rückschlagventil (74) aus einem den zweiten Vorsteuerdruck führenden Raum (Rohrleitung 75) füllbar und über ein weiteres Rückschlagventil (76) mit einem den ersten Vorsteuerdruck führenden Raum (Leitung 64) verbunden ist, und wobei die dritte Feder (67) nur bei Belastung des dritten Kolbens (68) mit einer die Vorsteuer-Regeldruckhöhe überschreitenden Druckhöhe komprimierbar ist (Fig. 1 und 2).

10. Führerbremsventil nach Anspruch 9, dadurch gekennzeichnet, daß die Selbsthaltevorrichtung (58) ein entgegengesetzt zu ihrem Absperrventil (65) schaltbares Einlaßventil (70, 71) in einer eine Drossel (72) aufweisenden Verbindung von der Druckluftquelle (Hauptbehälterleitung 5) zu ihrem Beaufschlagungsraum (69) aufweist (Fig. 2).

11. Führerbremsventil nach einem oder mehreren der Ansprüche 1 bis 4, dadurch gekennzeichnet, daß das Löse- und das Bremssteuerventil (29' und 44') als bei Erregung das Durchgangsventil (19, 20) geöffnet bzw. das Auslaßventil (45) geschlossen haltende Magnetventile ausgebildet sind, daß jede Vorsteuereinrichtung (77') wenigstens drei einerseits mit einer elektrischen Spannungsquelle (105) verbundene Kontakte (101, 102 und 103) aufweist, deren erster Kontakt (101) nur in der Betätigungsstellung « Lösen » geschlossen ist und die Spannungsführung eines zur Erregungsspule (107) des Lösesteuer-Magnetventils (29') führenden Lösekabels (106) überwacht, deren zweiter Kontakt (103) nur in der Betätigungsstellung « Bremsen » geöffnet ist und — gegebenenfalls in Serienschaltung zu entsprechenden Kontakten (103) weiterer Vorsteuereinrichtungen (77') — die Spannungsführung eines zur Erregungsspule (113) des Bremssteuer-Magnetventils (44') führenden Bremskabels (112, 112') überwacht, und deren dritter Kontakt (102) nur in der Betätigungsstellung « Füllen » geschlossen ist und die Spannungsführung eines zur Erregungsspule (109) eines Halterelais (110) führenden Haltekabels (108) überwacht, daß das Halterelais (110) zwei bei Erregung geschlossene Relaiskontakte (114 und 115) aufweist, deren einer Relaiskontakt (115) zwischen das Löse- und das Bremskabel (106 und 112') und deren anderer Relaiskontakt (114) zwischen das Halte- und das Bremskabel (108 und 112') eingeordnet ist, und daß die Erregungsspulen (107, 113 und 109) andererseits mit dem zweiten Pol der Spannungsquelle (105) verbunden sind (Fig. 3).

12. Führerbremsventil nach Anspruch 2, dadurch gekennzeichnet, daß die Selbsthaltevorrichtung (Halterelais 110' und 142) mit einer in der Betätigungsstellung « Lösen » und gegebenenfalls in der « Ruhestellung » der Vorsteuereinrichtung (77') bei wenigstens annähernder Druckgleichheit von Regeldruckhöhe und Steuerdruckhöhe ansprechenden Schalteinrichtung (Differenzdruckschalter 136) zusammenwirkt, welche bei ihrem Ansprechen die Selbsthalteeinrichtung erregt.

13. Führerbremsventil nach Anspruch 12 und gegebenenfalls einen oder mehreren der Ansprüche 2 bis 4, dadurch gekennzeichnet, daß das Löse- und das Bremssteuerventil (29' und 44') als bei Erregung das Durchgangsventil (19, 20) geöffnet bzw. das Auslaßventil (45) geschlossen haltende Magnetventile ausgebildet sind, daß jede Vorsteuereinrichtung (77') wenigstens drei einerseits mit einer elektrischen Spannungsquelle (105) verbundene Kontakte (101, 102 und 103) aufweist, deren erster Kontakt (101) nur in der Betätigungsstellung « Lösen » geschlossen ist und die Spannungsführung eines zur Erregungsspule (107) des Lösesteuer-Magnetventils (29') führenden Lösekabels (106) überwacht, deren zweiter Kontakt (103) nur in der Betätigungsstellung « Bremsen » geöffnet ist und — gegebenenfalls in Serienschaltung zu entsprechenden Kontakten (103) weiterer Vorsteuereinrichtungen (77') — die Spannungsführung eines zur Erregerspule (113) des Bremssteuer-Magnetventils (44') führenden Bremskabels (112, 112') überwacht, und deren dritter Kontakt (102) nur in der Betätigungsstellung « Füllen » geschlossen ist und die Spannungsführung eines zur Erregungsspule eines Halterelais (1108) führenden Haltekabels (108) überwacht, daß das Halterelais (110') zwei bei Erregung geschlossene Kontakte (114' und 115') aufweist, daß ein Relais (142) vorgesehen ist, dessen Erregungsspule über einen nur bei die Regeldruckhöhe des Druckreglers (9) zumindest um einen geringen Druckwert von ca. 0,2 bar unterschreitender Höhe des Steuerdruckes geöffneten Kontak (138) eines Differenzdruckschalters (136) an das Bremskabel (112, 112') angeschlossen ist und das bei Erregung einen Kontakt (144) geschlossen sowie zwei weitere Kontakte (143 und 145) geöffnet hält, wobei der geschlossene Kontakt (144) des Relais (142) in eine Verbindung vom Bremskabel (112, 112') zum Lösekabel (106), der eine geöffnete Kontakt (143) des Relais (142) in eine Verbindung vom Bremskabel (112, 112') zu den beiden Kontakten (114' und 115') des Halterelais (110') und der andere geöffnete Kontakt (145) des Relais (142) zwischen das Lösekabel (106) und ein Kabel (147) eingeordnet ist, und wobei des weiteren der eine Kontakt (114') des Halterelais (110') andererseits an das Haltekabel (108) und der andere Kontakt (115') des Halterelais (110') andererseits an das zu dem Kontakt (145) des Relais (142) führende Kabel (147) angeschlossen ist, und daß die Erregungsspulen des Lösesteuer-Magnetventils (29), des Bremssteuer-Magnetventils (44'), des Halterelais (110') und des Relais (142) andererseits mit dem zweiten Pol der Spannungsquelle (105) verbunden sind (Fig. 5).

14. Führerbremsventil nach Anspruch 11 oder 13, dadurch gekennzeichnet, daß das Löse- und das Bremssteuer-Magnetventil (29' und 44') gleichartig ausgebildet sind, wobei der dem Durchgangsventil (19, 20) entsprechende Ventilteil (20') des Bremssteuer-Magnetventils (44') blind abgeschlossen ist.

## Claims

1. Driver's brake valve for indirect compressed air braking of rolling stock, having servo devices (77, 77'), operable arbitrarily in the directions « release » and « brake » and returning automatically to a middle rest position after being operated, for controlling a servo medium, having a self-closing relay valve (1), controllable in accordance with the control of the servo medium and in dependence on the activation time of the servo devices (77, 77'), for monitoring the pressure of a main air line, and having a pressure regulator (9), giving out a regulated pressure, to provide for the relay valve (1) a control pressure, whose level can be influenced by means of the servo medium, one release and braking control valve in each case (29 respectively 29' and 44, respectively 44') controllable by the servo medium being provided, the release control valve (29, respectively 29') comprising a through-passage valve (19, 20) monitoring a connection from the pressure regulator (9) to a space (32, 35) subjected to the control pressure, and the brake control valve (44, respectively 44') comprising an outlet valve (45) for the space (32, 35) guiding the control pressure, and, when the servo devices (77, 77') are in the operating position « release », the release control valve (29 respectively 29') being in its switch position with an opened through-passage valve (19, 20) and the brake control valve (44 respectively 44') being in its switch position with a closed outlet valve (45), and when the servo devices (77 respectively 77') are in the « rest position », the brake control valve (44 respectively 44') being in its switch position with a closed outlet valve (45), and when the servo devices (77 respectively 77') are in the operating position « brake », the release control valve (29 respectively 29') being in its switch position with a closed through-passage valve (19, 20) and the brake control valve (44 respectively 44') being in its switch position with an open outlet valve (45), characterised in that the release control valve (29 respectively 29') has a double valve, which comprises the through-passage valve (19, 20) inserted into the connection from the pressure regulator (9) to a pressure interspace (21) and a ventilation valve (19, 23) for the pressure interspace (21) operable in opposite fashion thereto, and in that the pressure interspace (21) is connected to the space (32, 35) guiding the control pressure for the relay valve (1) via a blocking valve (31) openable only when subjected to pressure.

2. Driver's brake valve according to claim 1, characterised in that in a further operating position « fill » of the servo devices (77 respectively 77'), the release control valve (29, respectively 29') is in its switch position with an open through-passage valve (19, 20) and the brake control valve (44 respectively 44') is in its switch position with a closed outlet valve (45), and in that a self-holding device (58, respectively holder relay 110) is provided, which is excitable only in this operating position by the servo medium, and which, after being excited, remains self-excited up to a subsequent selection of the operating position « brake », and which, in its excited position, keeps the release control valve (29 respectively 29') in the latter's switch position corresponding to the operating position « release » of the servo device (77 respectively 77').

3. Driver's brake valve according to claim 1 or 2, characterised in that the blocking valve (31) is controlled by a piston (33), which is loaded in the opening direction by the pressure in the pressure interspace (21) and on the other side by a spring (34).

4. Driver's brake valve according to claim 1, 2 or 3, characterised in that a second through-passage valve (38), which closes when a minimum pressure level of the control pressure is fallen short of, is inserted in front of or behind the outlet valve (45) of the brake control valve (44 respectively 44').

5. Driver's brake valve according to one or several of the claims 1 to 4, characterised in that a multi-seat valve (53) is provided, which comprises a blocking valve (57) inserted into a connection parallel to the outlet valve (45) of the brake control valve (44 respectively 44') and leading from the space (32 respectively line 7) subjected to the control pressure to a ventilation nozzle (54), which (57) is controlled by a piston member (55), which in turn is loaded in the opening direction of the blocking valve (57) by the pressure in front of the ventilation nozzle (54) and the force of a spring (56) and on the other side by the regulating pressure.

6. Driver's brake valve according to claim 1, characterised in that there is inserted into a throttled connection (opening 132) from a space (chamber 117), subjected to the regulating pressure of the pressure regulator (9), to a space (chamber 119) guiding the control pressure of the relay valve (1) a blocking valve (120, 121, 123), which is operable by a piston member (118) loaded in the closing direction by the regulating pressure and in the opposite direction by the control pressure and the force of a spring (134) (Fig. 4).

7. Driver's brake valve according to claim 6, characterised in that the blocking valve (120, 121, 123) comprises two concentric valve seats (120 and 121) enclosing an annular space (122), and in that a further blocking valve (127, 128), which is open when the blocking valve (120, 121, 123) is closed, is provided in a connection from the annular space (129) to the atmosphere (Fig. 4).

8. Driver's brake valve according to one or several of the above claims, characterised in that a pneumatic servo pressure is provided as a servo medium, in that each servo device (77) has an inlet valve (85, 88), which is open in the operating positions « fill » and « release », leading from a compressed air source (main reservoir line 5) into a space (81) filled with a first servo pressure, and an outlet valve (83, 85), which is open in the operating position « brake », leading out of this space (81), in that there is provided in the vicinity of the relay valve (1) a pressure-reducing valve (59), which is adjusted to a servo-regulating-pressure level below the pressure of the compressed air source (main reservoir line 5), and whose outlet (63) is connected to a space (line 64) guiding the first servo pressure, in that the release control valve (29) is controlled by a first piston (26), which is subjected in the opening direction of the through-passage valve (19, 20) by the first servo pressure against the force of a first spring (28), the first spring (28) being compressible, only when the first piston (26) is loaded, with a pressure level exceeding the servo regulating pressure level, and in that the brake control valve (44) is controlled by a second piston (48), which is loaded in the closing direction of the outlet valve (45) by the first servo pressure against the force of a second spring (49), the second spring (49) being compressible with the servo regulating pressure level when the second piston (48) is loaded (Figs. 1 and 2).

9. Driver's brake valve according to claims 2 and 8, characterised in that each servo device (77) comprises a second inlet and outlet valve (85', 88' and 83', 85') for controlling a second servo pressure, the second inlet valve (85', 88') being open only in the operating position « fill » to connect a space (92), guiding the second servo pressure, to the compressed air source (main reservoir line 5), and the second outlet valve (83', 85') being open in all other positions of the servo device (77), and in that the self-holding device (58) comprises a blocking valve (65) inserted between the outlet (63) of the pressure-reducing valve (59) and a space (line 64) guiding the first servo pressure, which (65) is controlled by a third piston (68) against the force of a third spring (67), the third piston (68) being loaded in the closing direction of the blocking valve (65) by the pressure into a treatment space (69), which can be filled via a non-return valve (74) from a space (tube line 75) guiding the second servo pressure, and which is connected via a further non-return valve (76) to a space (line 64) guiding the first servo pressure, and the third spring (67) being compressible with a pressure level exceeding the servo-regulating-pressure level only when the third piston (68) is loaded (Figs. 1 and 2).

10. Driver's brake valve according to claim 9, characterised in that the self-holding device (58) comprises an inlet valve (70, 71), switchable in an opposite direction to its blocking valve (65), in a connection, comprising a throttle (72), from the compressed air source (main reservoir line 5) to its treatment space (69) (Fig. 2).

11. Driver's brake valve according to one or several of the claims 1 to 4, characterised in that the release and brake control valves (29' and 44') are designed as magnet valves keeping the through-passage valve (19, 20) open and respectively the outlet valve (45) closed when excited, in that each servo device (77') comprises at least three contacts (101, 102 and 103) connected at one end with an electrical voltage source (105), whose first contact (101) is closed only in the operating position « release » and monitors the voltage supply of a release cable (106) leading to the exciter coil (107) of the release control magnet valve (29'), whose second contact (103) is open only in the operating position « brake » and — if necessary in series connection to corresponding contacts (103) of further servo devices (77') — monitors the voltage supply of a brake cable (112, 112') leading to the exciter coil (113) of the brake control magnet valve (44'), and whose third contact (102) is closed only in the operating position « fill » and monitors the voltage supply of a holding cable (108) leading to the exciter coil (109) of a holder relay (110), in that the holder relay (110) comprises two relay contacts (114 and 115), which are closed when excited, and whose one relay contact (115) is inserted between the release and the brake cables (106 and 112'), and whose other relay contact (114) is inserted between the holding and brake cables (108 and 112'), and in that the exciter coils (107, 113 and 109) are connected at the other end to the second pole of the voltage source (105) (Fig. 3).

12. Driver's brake valve according to claim 2, characterised in that the self-holding device (holder relay 110' and 142) coacts with a switch device (differential pressure switch 136) which reacts when there is at least approximately a balance of pressure between the regulating pressure level and control pressure level in the operating position « release » and as the case may be, in the « rest position » of the servo device (77'), and which excites the self-holding device when it reacts.

13. Driver's brake valve according to claim 12 and, as the case may be, to one or several of the claims 2 to 4, characterised in that the release and brake control valves (29' and 44') are designed as magnet valves keeping the through-passage valve (19, 20) open and the outlet valve (45) closed when excited, in that each servo device (77') comprises at least three contacts (101, 102 and 103) connected at one end to an electrical voltage source (105), whose first contact (101) is closed only in the operating position « release » and monitors the voltage supply of a release cable (106) leading to the exciter coil (107) of the release control magnet valve (29'), whose second contact (103) is open only in the operating position « brake » and — if necessary in series connection to corresponding contacts (103) of further servo devices (77') — monitors the voltage supply of a brake cable (112, 112') leading to the exciter coil (113) of the brake control magnet valve (44'), and whose third contact (102) is closed only in the operating position « fill » and monitors the voltage supply of a holding cable (108) leading to the exciter coil of a holder relay (108), in that the holder relay (110') comprises two contacts (114' and 115') which are closed when excited, in that a relay (142) is provided, whose exciter coil is connected to the brake cable (112, 112') via a contact (138) of a differential pressure switch (136) open only when the level of control pressure falls below the regulating pressure level of the pressure regulator (9) at least by a low pressure value of approx. 0.2 bar, and which (142), when excited, keeps one contact (144) closed and two further contacts (143 and 145) open, the closed contact (144) of the relay (142) being inserted into a connection from the brake cable (112, 112') to the release cable (106), the one open contact (143) of the relay (142) being inserted into a connection from the brake cable (112, 112') to the two contacts (114' and 115') of the holder relay (110') and the other open contact (145) of the relay (142) being inserted between the release cable (106) and a cable (147), and, furthermore, one contact (114') of the holder relay (110') being connected at the other end to the holding cable (108) and the other contact (115') of the holder relay (110') being connected at the other end to the cable (147) leading to the contact (145) of the relay (142), and in that the exciter coils of the release control magnet valve (29), of the brake control magnet valve (44') of the holder relay (110') and of the relay (142) being connected at the other end to the second pole of the voltage source (105) (Fig. 5).

14. Driver's brake valve according to claim 11 or 13, characterised in that the release and brake control magnet valves (29' and 44') are of the same design, the valve part (20') of the brake control magnet valve (44') corresponding to the through-passage valve (19, 20) being closed off blind.

**Revendications**

1. Robinet de frein de mécanicien pour des freins à air comprimé à action indirecte pour des véhicules sur rails avec des dispositifs de précommande (77, 77') susceptibles d'être commandés au choix dans le sens « desserrage » et « freinage », revenant après leur commande automatiquement dans une position médiane de repos et servant à commander un milieu de précommande, avec une soupape-relais (1) susceptible d'être commandée de façon correspondante à la commande du milieu de précommande en fonction de la durée de la commande des dispositifs de précommande (77, 77'), se fermant automatiquement et servant à surveiller une pression de la conduite d'air principale, et avec un régulateur de pression (9) fournissant une pression de réglage en vue d'établir une pression de commande pour la soupape-relais (1) susceptible d'être influencée du point de vue du niveau de la pression à l'aide du milieu de précommande, dans lequel il est prévu respectivement une valve de commande du desserrage et du freinage (29, 29' et 44, 44') respectivement susceptible d'être contrôlée par le milieu de précommande, la soupape de précommande du desserrage (29, 29') présentant une liaison du régulateur de pression (9) à une soupape de traversée (19, 20) contrôlant une chambre (32, 35) chargée par la pression de commande, alors que la soupape de commande du freinage (44, 44') comporte une soupape d'évacuation (45) pour la chambre (32, 35) dans laquelle règne la pression de commande, et dans lequel pour la position de commande « desserrage » des dispositifs de précommande (77, 77'), la soupape de commande du desserrage (29, 29') se trouve dans sa position de commutation avec la soupape de traversée (19, 20) ouverte et la soupape de commande du freinage (44, 44') dans sa position de commutation avec soupape d'évacuation (45) fermée, alors que dans la « position de repos » des dispositifs de précommande (77, 77') la soupape de commande du freinage se situe dans sa position de commutation avec soupape d'évacuation (45) fermée et que dans la position de commande « freinage » des dispositifs de précommande (77, 77'), la soupape de commande du desserrage (29, 29') se situe dans sa position de commutation à soupape de traversée (19, 20) fermée et la soupape de commande du freinage (44, 44') dans sa position de commutation à soupape d'évacuation (45) ouverte, caractérisé par le fait que la soupape de commande du desserrage (29, 29') comporte une double soupape qui comprend la soupape de traversée (19, 20) montée dans la liaison menant du régulateur de pression (9) à une chambre de pression intermédiaire (21) et une soupape de mise à l'atmosphère (19, 23) de la chambre de pression intermédiaire, susceptible d'être connectée en opposition à la soupape de traversée, et que la chambre de pression intermédiaire (21) est reliée, par l'intermédiaire d'une soupape d'arrêt (31) qui ne peut être ouverte que lors d'une mise sous pression de cette chambre, à la chambre (32, 35) dans laquelle règne la pression de commande pour la soupape-relais (1).

2. Robinet de frein de mécanicien selon la revendication 1, caractérisé par le fait que dans une position de commande supplémentaire « remplissage » des dispositifs de précommande (77, 77'), la soupape de commande de desserrage (29, 29') se trouve dans sa position de commutation à soupape de passage ouverte (19, 20) et la soupape de commande du freinage (44, 44') dans sa position de commutation à soupape d'évacuation (45) fermée, et qu'il est prévu un dispositif de maintien automatique (58 ou relais de maintien 110) susceptible d'être excité uniquement dans cette position de commande du milieu de précommande, lequel dispositif de maintien automatique reste excité automatiquement après son excitation et jusqu'au réglage suivant de la position de commande « freinage » et maintient dans sa position d'excitation la soupape de commande du desserrage (29, 29') dans sa position de commutation qui correspond à la position de commande « desserrage » du dispositif de précommande (77, 77').

3. Robinet de frein de mécanicien selon la revendication 1 ou 2, caractérisé par le fait que la soupape d'arrêt (31) est commandée par un piston (33) qui, dans la direction d'ouverture, est chargé par la pression qui règne dans la chambre de pression intermédiaire (21) et d'autre part est chargé par un ressort (34).

4. Robinet de frein de mécanicien selon la revendication 1, 2 ou 3, caractérisé par le fait qu'en amont ou en aval de la soupape d'évacuation (41) de la soupape de commande de freinage (44, 44') est montée une seconde soupape de passage (38) qui se ferme lorsqu'on passe en dessous d'un niveau de pression minimum de la pression de commande.

5. Robinet de frein de mécanicien selon une ou plusieurs des revendications 1 à 4, caractérisé par le fait qu'il est prévu une soupape à paliers (53) qui comporte une soupape d'arrêt (57) disposée dans une liaison parallèle à la soupape d'évacuation (45) de la soupape de commande du freinage (44, 44') et qui mène de la chambre (32 ou conduite 7) chargée avec la pression de commande, à une tuyère de mise à l'atmosphère (54), ladite soupape d'arrêt étant commandée par un élément de piston (55) qui est chargé, en direction de l'ouverture de la soupape d'arrêt, par la pression à l'avant de la tuyère de mise à l'atmosphère (34) et la force de ressort (56), par ailleurs par la pression de réglage.

6. Robinet de frein de mécanicien selon la revendication 1, caractérisé par le fait que dans une liaison étranglée (ouverture 132) entre un espace (chambre 117) chargé par la pression de réglage du régulateur de pression (9) et un espace (chambre 119) dans lequel règne la pression de commande de la soupape-relais (1), est disposée une soupape d'arrêt (120, 121, 123) qui est susceptible d'être commandée par un élément de piston (118) qui est chargé en direction de fermeture par la pression de réglage et dans le sens opposé par la pression de commande et la force d'un ressort (134) (figure 4).

7. Robinet de frein de mécanicien selon la revendication 6, caractérisé par le fait que la soupape d'arrêt (120, 121, 123) comporte deux sièges de soupape (120 et 121) délimitant un espace annulaire (122), et qu'une soupape d'arrêt supplémentaire (127, 128) qui n'est ouverte que lorsque la soupape d'arrêt (120, 121, 123) est fermée, est prévue dans une liaison menant de l'espace annulaire (129) à l'atmosphère (figure 4).

8. Robinet de frein de mécanicien selon une ou plusieurs des revendications précédentes, caractérisé par le fait qu'il est prévu, comme milieu de précommande, une pression de précommande pneumatique, que chaque dispositif de précommande (77) comporte une soupape d'admission (85, 88) d'une source de réserve d'air comprimé (conduite 5 du réservoir principal) dans une chambre (81) remplie avec une première pression de précommande, soupape d'admission qui est ouverte dans les positions de commande « remplissage » et « desserrage », et une soupape d'évacuation (83, 85) à partir de cette chambre (81), soupape d'évacuation qui est ouverte dans la position de commande « freinage », que près de la soupape-relais (1) est prévue une soupape de réduction de pression (55) qui est réglée à un niveau de pression de préréglage situé en dessous de la pression de la source d'air comprimé de réserve (conduite 5 du réservoir principal) et dont la sortie (63) est reliée à un espace (conduite 64) dans lequel règne la pression de précommande, que la soupape de commande du desserrage (29) est commandée par un premier piston (26) qui, pour la direction d'ouverture de la soupape de traversée (19, 20), est chargé par la première pression de précommande, à l'encontre de la force d'un premier ressort (28), ledit premier ressort (28) n'étant susceptible d'être comprimé que lorsque le premier piston (26) est chargé à un niveau de pression qui dépasse le niveau de pression de préréglage, et que la soupape de commande du freinage (44) est commandée par un second piston (48) qui, dans la direction de fermeture de la soupape d'évacuation (45), est chargé par la première pression de précommande, à l'encontre de la force d'un second ressort (49), ledit second ressort (49) étant susceptible d'être commandé lorsque le second piston (48) est chargé avec le niveau de pression de préréglage (figures 1 et 2).

9. Robinet de frein de mécanicien selon la revendication 2 et 8, caractérisé par le fait que chaque dispositif de précommande (77) comporte une seconde soupape d'admission et d'évacuation (85', 88' et 83', 85') pour commander une seconde pression de précommande, ladite seconde soupape d'admission (85', 88') n'ouvrant que dans la position de commande « remplissage » en vue de relier avec la source d'air comprimé de réserve (conduite 5 du réservoir principal) un espace (92) dans lequel règne la seconde pression de précommande, la seconde soupape d'évacuation (83', 85') étant ouverte dans toutes les autres positions du dispositif de précommande (77), et que le dispositif de maintien automatique (58) comporte une soupape d'arrêt (65) qui est disposée entre la sortie (63) de la soupape de réduction de pression (59) et un espace (conduite 64) dans lequel règne la première pression de précommande, soupape d'arrêt (75) qui est commandée par un troisième piston (68), à l'encontre de la force d'un troisième ressort (67), la réalisation étant telle que le troisième piston (68) est chargé, en direction de fermeture de la soupape d'arrêt (65), par la pression qui règne dans une chambre de charge (69) qui est susceptible d'être remplie par l'intermédiaire d'une soupape de retenue (74) à partir d'un espace (conduite tubulaire 75) dans lequel règne la seconde pression de précommande et qui est relié par l'intermédiaire d'une soupape de retenue supplémentaire (76) avec un espace (conduite 64) dans lequel règne la première pression de précommande, alors que le troisième ressort (67) n'est susceptible d'être comprimé que lorsque le troisième piston (68) est chargé à un niveau de pression qui dépasse le niveau de pression de préréglage (figure 1 et figure 2).

10. Robinet de frein de mécanicien selon la revendication 9, caractérisé par le fait que le dispositif de maintien automatique (58) comporte une soupape d'admission (70, 71), susceptible d'être commandée en sens inverse par rapport à sa soupape d'arrêt, soupape d'admission qui est disposée dans une liaison (72), comportant un étranglement, entre la source d'air comprimé (conduite 5 du réservoir principal) et sa chambre de charge (69) (figure 2).

11. Robinet de frein de mécanicien selon une ou plusieurs des revendications 1 à 4, caractérisé par le fait que la soupape de commande de desserrage et la soupape de commande du freinage (29' et 44') sont réalisées sous la forme d'électrovannes qui, à l'état excité, maintiennent la soupape de traversée (19, 20) dans son état ouvert et la soupape d'évacuation (45) dans son état fermé, que chaque dispositif de précommande (77') comporte au moins trois contacts (101, 102 et 103), reliés d'une part à une source de tension électrique (105), dont le premier contact (101) est fermé uniquement dans la position de commande « desserrage » et surveille la mise sous tension d'un câble de desserrage (106) menant à la bobine d'excitation (107) de l'électrovanne de commande du desserrage (29'), dont le second contact n'est ouvert que dans la position de commande « freinage » et — éventuellement dans un circuit série avec les contacts correspondants (103) d'autres dispositifs de précommande (77'), — surveille la mise sous tension d'un câble de freinage (112, 112') menant à la bobine d'excitation (113) de l'électrovanne de commande du freinage (44'), et dont le troisième contact (102) n'est fermé que dans la position de commande « remplissage » et surveille la mise sous tension d'un câble de maintien (108) qui mène à la bobine d'excitation (109) d'un relais de maintien (110), que le relais de maintien (110) comporte deux contacts de relais (114 et 115) qui sont fermés à l'excitation et dont un contact de relais (115) est disposé entre le câble de desserrage et le câble de freinage (106 et 112) et dont l'autre relais de contact (114) est situé entre le câble de maintien et le câble de freinage (108 et 112'), et que les bobines d'excitation (107, 113 et 109) sont d'autre part reliées à la seconde borne de la source de tension (105) (figure 3).

12. Robinet de frein de mécanicien selon la revendication 2, caractérisé par le fait que le dispositif de maintien automatique (relais de maintien 110' et 142) coagit avec un dispositif de commutation (commutateur à pression différentielle 136) qui répond, dans la position de commande « desserrage » et éventuellement dans la « position de repos » du dispositif de précommande (217') et au moins dans le cas d'une égalité de pression du niveau de la pression de réglage et du niveau de la pression de commande, ledit dispositif de commutation excitant, lorsqu'il répond, le dispositif de maintien automatique.

13. Robinet de frein de mécanicien selon la revendication 12 et éventuellement une ou plusieurs des revendications 2 à 4, caractérisé par le fait que la soupape de commande de desserrage et la soupape de commande de freinage (29' et 44') sont réalisées sous forme d'électrovannes qui, à l'état excité, maintiennent la soupape de traversée (19, 20) dans son état ouvert et la soupape d'évacuation (45) dans son état fermé, que chaque dispositif de précommande (77') comporte au moins trois contacts (101, 102 et 103), reliés d'une part à une source de tension électrique (105), dont le premier contact (101) est fermé uniquement dans la position de commande « desserrage » et surveille la mise sous tension d'un câble de desserrage (106) menant à la bobine d'excitation (107) de l'électrovanne de commande du desserrage (29'), dont le second contact n'est ouvert que dans la position de commande « freinage » et — éventuellement dans un circuit série avec les contacts correspondants (103) d'autres dispositifs de précommande (77'), — surveille la mise sous tension d'un câble de freinage (112, 112') menant à la bobine d'excitation (113) de l'électrovanne de commande du freinage (44'), et dont le troisième contact (102) n'est fermé que dans la position de commande « remplissage » et surveille la mise sous tension d'un câble de maintien (108) qui mène à la bobine d'excitation (109) d'un relais de maintien (110), que le relais de maintien (110') comporte deux contacts de relais (114' et 115'), qu'un relais (142) est prévu dont la bobine d'excitation est reliée au câble de freinage (112, 112') par l'intermédiaire d'un contact d'un interrupteur de pression différentielle (136) qui n'est ouvert que pour un niveau de la pression de commande qui se situe en dessous du niveau de la pression de réglage du régulateur de pression (9) d'au moins une valeur de pression faible d'environ 0,2 bar, et qui lors de son excitation maintient fermé un contact (144) ainsi que deux autres contacts (143 et 145) dans leur position ouverte, la réalisation étant telle que lorsque le contact (144) du relais (142) est fermé, dans une liaison menant du câble de freinage (112, 112') au câble de desserrage (106), le contact ouvert (143) du relais (142) est disposé dans une liaison menée du câble de freinage (112, 112') aux deux contacts (114' et 115') du relais de maintien (110) et l'autre contact ouvert (145) du relais (142) se situe entre le câble de desserrage (106) et un câble (147), alors que le contact supplémentaire (114') du relais de maintien (110') est d'autre part relié au câble de maintien (108) et l'autre contact (115) du relais de maintien (110) est relié d'autre part au câble (147) qui mène au contact (145) du relais (142), et que les bobines d'excitation des électrovannes de commande du desserrage (29), de l'électrovanne de commande du freinage (44'), du relais de maintien (110') et du relais (142) sont d'autre part reliées à la seconde borne de la source de tension (105) (figure 5).

14. Robinet de frein de mécanicien selon la revendication 11 ou 13, caractérisé par le fait que les électrovannes de commande du desserrage et du freinage (29' et 44') sont réalisées de la même façon, étant noté que la partie de la soupape de l'électrovanne de commande du freinage (44'), qui correspond à la soupape de traversée (19, 20), est obturée.

Fig 1

0 032 567

**0 032 567**

Fig 2

Fig 3

0 032 567

Fig 4

Fig 5

0 032 567